# FASCICULE DE BREVET EUROPEEN

(11) **EP 2 870 165 B1**
(45) Date de publication et mention de la délivrance du brevet: **03.01.2018**
(21) Numéro de dépôt: 13734766.2
(22) Date de dépôt: 08.07.2013
(51) Int. Cl.: C07F 7/08, C07F 7/18

(54) **PRÉCURSEURS ORGANOSILANES POLYSILYLÉS FONCTIONNALISABLES**
FUNKTIONALISIERBARE POLYSILYLIERTE ORGANOSILANVORLÄUFER
FUNCTIONALISABLE POLYSILYLATED ORGANOSILANE PRECURSORS

(30) Priorité: 06.07.2012 FR 1256545
(43) Date de publication de la demande: 13.05.2015
(73) Titulaire: Centre National de la Recherche Scientifique (C.N.R.S.), 75016 Paris (FR); Ecole Nationale Supérieure de Chimie de Montpellier, 34296 Montpellier (FR); Université Montpellier 2, Sciences et Techniques, 34095 Montpellier Cedex 5 (FR); University of Chemistry and Technology - Prague, 166 28 Prague 6 (CZ)
(72) Inventeur: WONG CHI MAN, Michel, F-34740 Vendargues (FR); CATTOEN, Xavier, 38950 St Martin le Vinoux (FR); MOITRA, Nirmalya, Kolkata 700050 (IN); BURGLOVA, Kristyna, 75002 Prerov (CZ); HODACOVA, Jana, 14000 Prague 4 (CZ)
(74) Mandataire: Lavoix
(86) Numéro de dépôt international: PCT/EP2013/064376
(87) Numéro de publication internationale: WO 2014/006222

(56) Documents cités:
- US-A1- 2005 027 138
- US-A1- 2011 143 966
- NIRMALYA MOITRA ET AL: "Facile route to functionalized mesoporous silica nanoparticles by click chemistry", JOURNAL OF MATERIALS CHEMISTRY, vol. 2, no. 35, 2011, page 13476, XP055056978, ISSN: 0959-9428, DOI: 10.1039/c1jm12066b
- DATABASE REAXYS [Online] Elsevier; 2009, Cui et al: "A Two-Step, Formal [4 + 2] Approach toward Piperidin-4-ones via Au Catalysis", XP002694429,accession no. XRN=19667391 Database accession no. XRN=19667391 & CUI ET AL: "A Two-Step, Formal [4 + 2] Approach toward Piperidin-4-ones via Au Catalysis", J. AM. CHEM. SOC., vol. 131, 2009, pages 8394-8395,
- DATABASE REAXYS [Online] Elsevier; 2010, Cui et al: "Gold-catalyzed efficient synthesis of azepan-4-ones via a two-step [5 + 2] annulation", XP002694430,accession no. XRN=20415886 Database accession no. XRN=20415886 & CUI ET AL: "Gold-catalyzed efficient synthesis of azepan-4-ones via a two-step [5 + 2] annulation", CHEM. COMMUN., vol. 46, no. 19, 2010, pages 3351-3353,

## Description

La présente invention concerne un précurseur organosilane polysilylé fonctionnalisable et son procédé de préparation.

L'invention concerne également un matériau organosilicié fonctionnalisé issu de ce précurseur.

Les précurseurs organosilanes fonctionnalisables présentent un intérêt majeur dans de nombreux domaines car ils permettent la fabrication de matériaux hybrides organosiliciés mono- ou polyfonctionnalisés, pouvant se présenter sous forme de poudre, de revêtement ou de polymère ou pouvant être intégrés dans une matrice silicone.

Ils permettent également de fabriquer des produits se présentant sous la forme de particules fonctionnalisées, notamment de nanoparticules fonctionnalisées, par exemple avec un reste actif, pouvant notamment être relargué de manière contrôlée sous l'action d'un ou plusieurs paramètres.

US 2011/143966 décrit une méthode pour fonctionnaliser une surface qui comprend le greffage d'un composé silylé fonctionnalisé via une liaison covalente de type silyloxy. Moitra et al. (J. Mater. Chem., 2011, 21, 13476-13482) décrit des nanoparticules poreuses de silice fonctionnalisées à la surface par des fonctions de type azoture ou alcyne. Ces composés sont monosilylés.
US 2005/0027138 décrit un procédé de préparation de composés organochlorosilane mono- ou di-sylilés par réation d'un composé comprenant une double liaison avec un trichlorosilanène en présence d'un catalyseur phosphinique.
La réaction entre des précurseurs organosilanes comprenant un groupement azoture et un composé fonctionnel comprenant un groupement alcyne a été décrite, permettant ainsi d'obtenir des composés organosilanes fonctionnalisés (Moitra et al, Chem.Commun., 2010, 46, 8416-8418 ; Bürglova et al, J.Org.Chem., 2011, 76, 7326-7333).
Cependant, les précurseurs décrits sont des précurseurs monosilylés et la réaction décrite ne permet d'aboutir qu'à des composés organosilanes comprenant majoritairement des fonctionnalités simples, telles que amine, alcool, thiol, halogénure, alkyle ou phényle.

Par ailleurs, des précurseurs organosilanes dans lesquels un groupement réactif est lié à deux chaînes silylées ont été décrits (Shea et al, Functional Hybrid Materials, 2004, 50-85).
Cependant, le fait que le groupement réactif soit directement lié aux chaînes silylées réduit l'accès à d'autres groupements réactifs et limite ainsi les possibilités de réaction ultérieure.

Ainsi un premier objectif de l'invention est de fournir des précurseurs organosilanes permettant d'obtenir des composés organosilanes polysilylés fonctionnalisés qui s'affranchissent des problèmes de l'état de la technique et qui apportent une solution à tout ou partie des problèmes de l'état de la technique.

Un autre objectif de l'invention est de proposer des précurseurs organosilanes polysilylés dont le procédé de préparation soit aisé à mettre en oeuvre et de rendement élevé.

Un autre objectif de l'invention est de proposer des organosilanes polysilylés permettant la préparation d'organosilices post-fonctionnalisables pouvant se présenter sous diverses formes, telles que films nanoparticules monolithes ou encore poudres

La présente invention a pour objet un composé choisi parmi les composés de formule (IIa), (IIb), (IIc), (IIg-2), (7), (11), ou (14) : 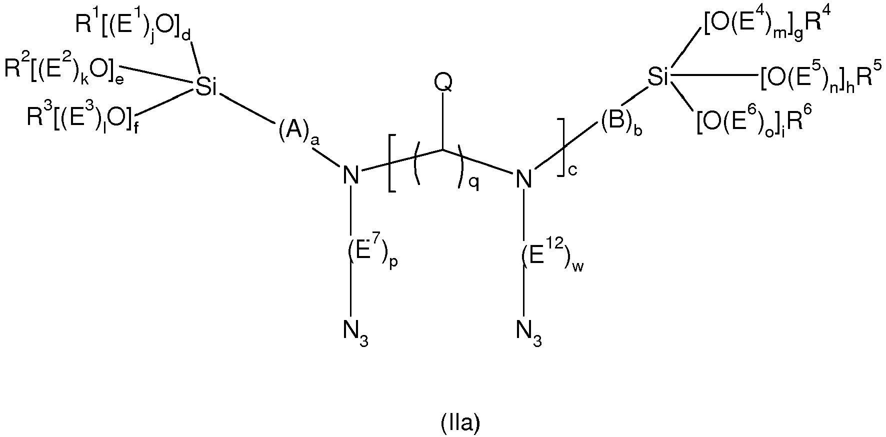 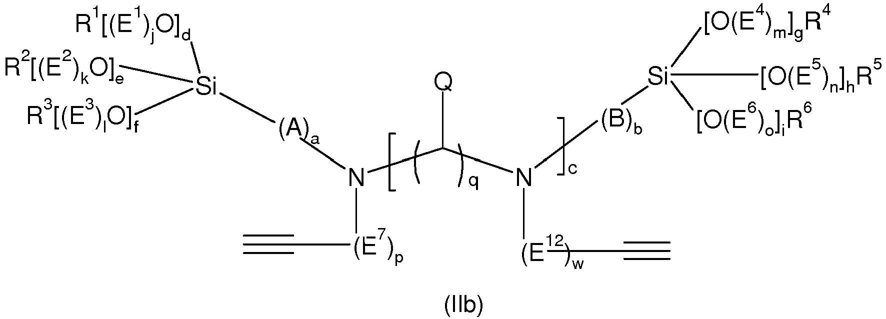 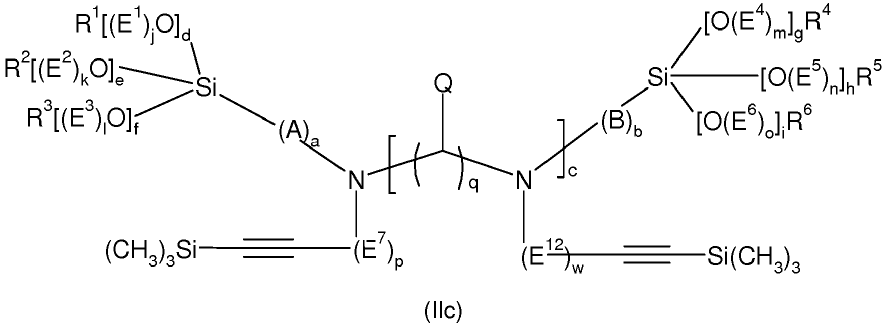 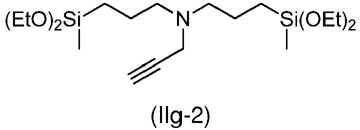 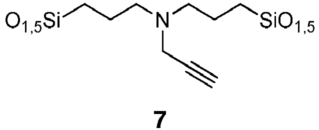 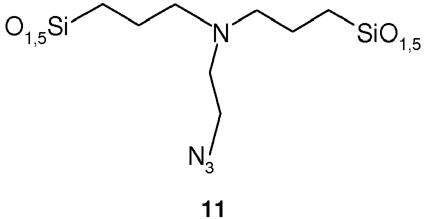 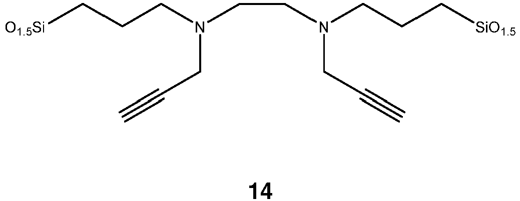 dans lesquels :
▪ R¹, R², R³, R⁴, R⁵ et R⁶, identiques ou différents, représentent un atome d'hydrogène, un groupement C₁-C₆-alkyle, un groupement aryl, un groupement C₁-C₆-alkoxy, un groupement C₃-C₈-alkylene-alcényl ;
▪ E¹, E², E³, E⁴, E⁵ et E⁶, identiques ou différents, représentent un groupement C₁-C₆-alkylene, C(O), C=CH₂, un groupement imino-C₁-C₆-alkyl, un groupement (C₁-C₆-alkyle)C=N- ;
▪ d, e, f, g, h, i, identiques ou différents, représentent 0, 1, 2, 3, 4, 5, 6 ;
▪ j, k, l, m, n, o, identiques ou différents, représentent 0, 1, 2, 3 ;
▪ A représente CH₂
▪ a représente 1, 2, 3, 4, 5, 6, 7, 8, 9, 10, 11 ou 12 ;
▪ B représente un groupement CH₂
▪ b représente 1, 2, 3, 4, 5, 6, 7, 8, 9, 10, 11 ou 12 ;
▪ c représente 0, 1, 2 ou 3 ;
▪ Q représente un atome d'hydrogène;
▪ q représente 0, 1, 2, 3 ou 4 ;
▪ E⁷ et E¹² identiques ou différents, représentent un groupement CR¹⁴R¹⁵, un groupement OCR¹⁶R¹⁷ ;
▪ R¹⁴, R¹⁵, R¹⁶, R¹⁷, identiques ou différents, représentent un atome d'hydrogène, un groupement C₁-C₆-alkyle, un groupement C₁-C₆-alkoxy, un groupement C₃-C₈-alkylene-alcényl, un groupement aryl, un groupement aryloxy ;
▪ p et w identiques ou différents, représentent 1, 2, 3, 4, 5, 6, 7, 8, 9, 10, 11 ou 12 ; ainsi qu'un énantiomère ou un diastéréoisomère de ce composé.

L'invention fournit également un composé de formules (IIf), (IIg), (IIh), (IIi), (IIj) ou (IIk)

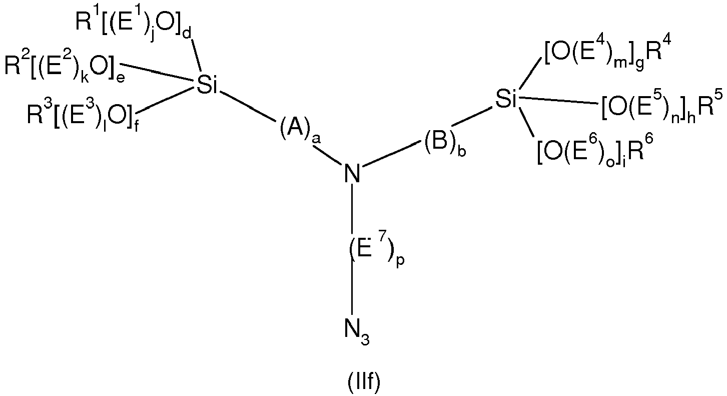

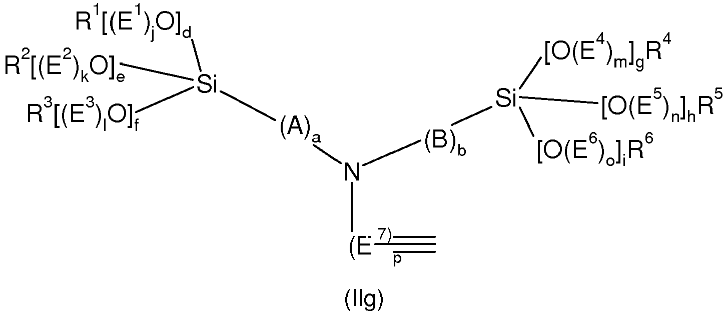

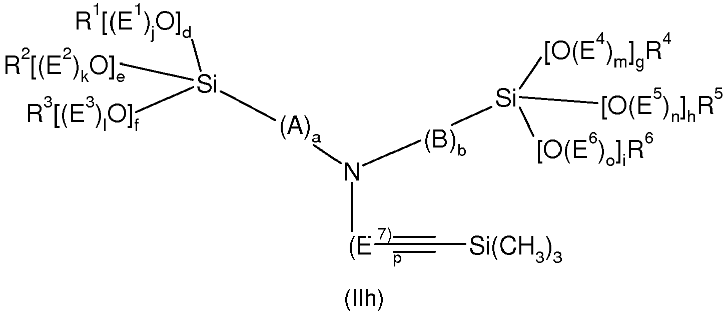

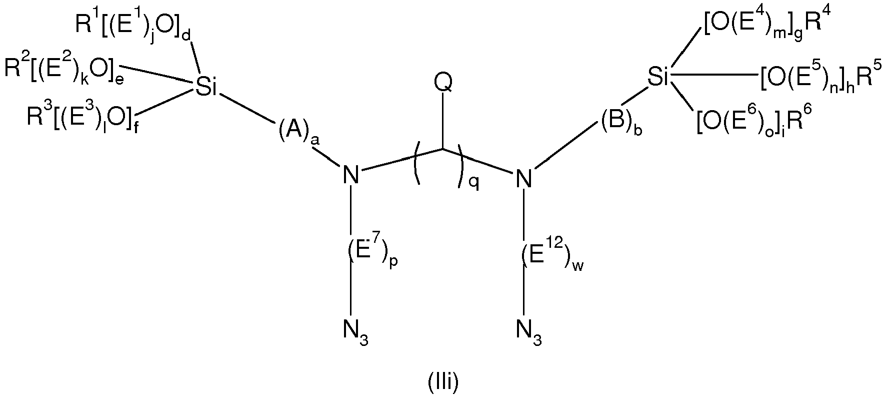

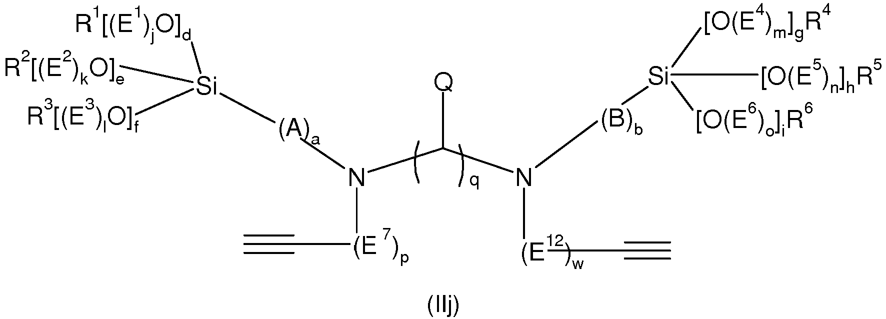

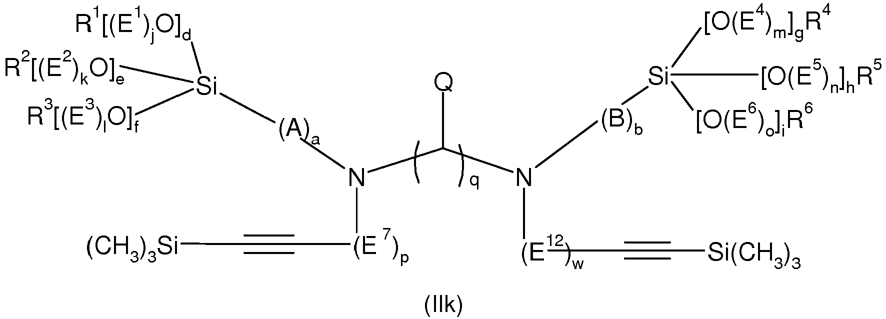

Les définitions de R¹, R², R³, R⁴, R⁵, R⁶, E¹, E², E³, E⁴, E⁵, E⁶, E⁷, E¹², A, B, Q, a, b, d, e, f, g, h, i, j, k, l , m, n, o, p, q et w données ci-dessus s'appliquent aux composés de formule (IIf), (IIg), (IIh), (IIi), (IIj) et (IIk).

De manière préférée, le composé peut être un composé de formule (IIi), (IIj) ou (IIk).

De manière avantageuse, pour les composés selon l'invention :
- A et B représentent un groupement -(CH₂)- ; ou
- Q représente un atome d'hydrogène ; ou
- R¹, R², R³, R⁴, R⁵ et R⁶ représentent indépendamment un groupement méthyle ou éthyle ; ou
- a représente 1, 2 ou 3 ; ou
- b représente 1, 2 ou 3 ; ou
- d, e, f, g, h et i, identiques ou différents, représentent 0 ou 1 ; ou
- j, k, l, m, n et o représentent 0 ; ou
- R⁷ représente un groupement méthyle, éthyle ou phényle. ; ou
- R⁸ représente un groupement méthyle, éthyle ou phényle ; ou
- R⁹ représente un groupement méthyle, éthyle ou phényle.
De manière avantageuse, le composé selon l'invention est un composé de formules (IIa), (IIb), (IIc), (IIf), (IIg), (IIh), (IIi), (IIj) ou (IIk) dans lesquelles :
- A et B représentent un groupement -(CH₂)- ;
- Q représente un atome d'hydrogène ;
- R¹, R², R³, R⁴, R⁵ et R⁶ représentent indépendamment un groupement méthyle ou éthyle ;
- a représente 1, 2 ou 3 ;
- b représente 1, 2 ou 3 ;
- d, e, f, g, h et i, identiques ou différents, représentent 0 ou 1 ;
- j, k, l, m, n et o représentent 0.

De manière également avantageuse, le composé selon l'invention est un composé de formules (IIa), (IIb), (IIc), (IIf), (IIg), (IIh), (IIi), (IIj) ou (IIk) dans lesquelles R¹, R², R³, R⁴, R⁵ et R⁶ représentent indépendamment un groupement alkoxy, de préférence methoxy ou ethoxy.
De manière également avantageuse, lorsque R¹, R², R³, R⁴, R⁵ et R⁶ représentent indépendamment un groupement alkoxy, j, k, l, m, n et o ne représentent pas 0.

Comme exemple de composé de formule (IIf) selon l'invention, on peut citer le composé de formule (IIf-1)

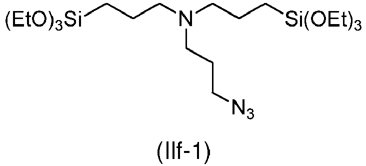

Comme exemples de composés de formule (IIg) selon l'invention, on peut citer les composés de formules (IIg-1) ou (IIg-2)

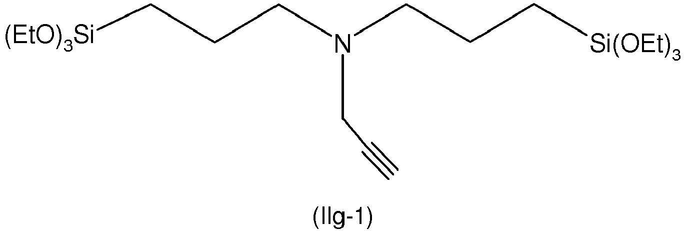

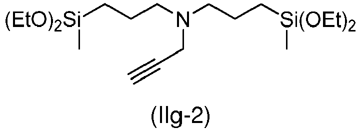

Comme exemple de composé de formule (IIh) selon l'invention, on peut citer le composé de formule (IIh-1)

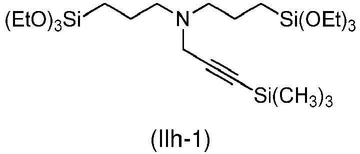

Comme exemple de composé de formule (IIi) selon l'invention, on peut citer le composé de formule (IIi-1)

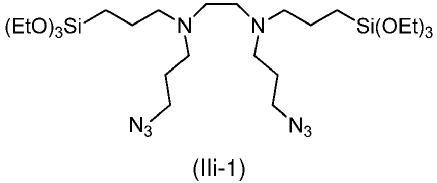

Comme exemples de composés de formule (IIj) selon l'invention, on peut citer les composés de formules (IIj-1), (IIj-2) ou (IIj-3) :

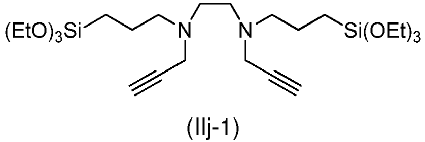

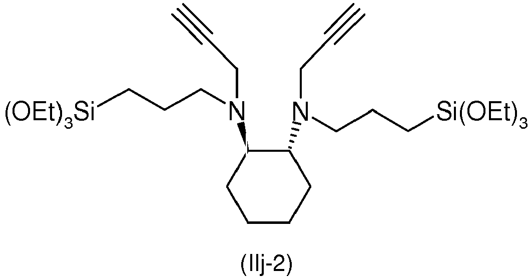

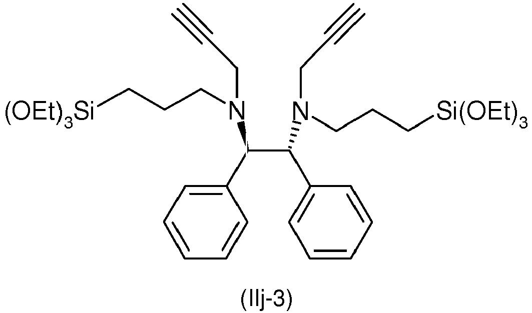

De préférence, le composé de l'invention est choisi parmi :

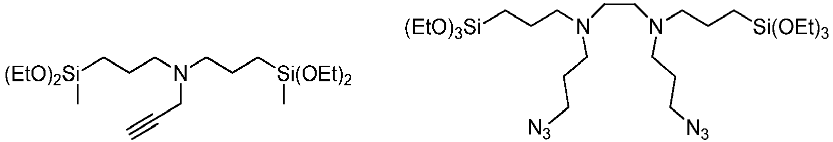

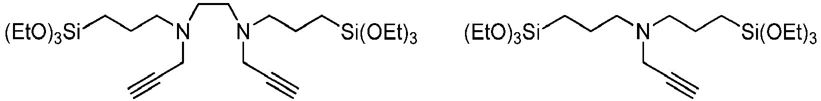

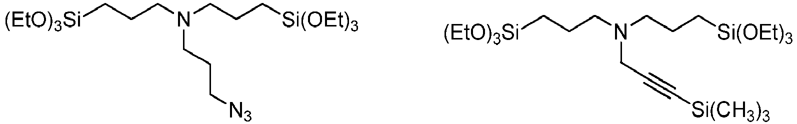

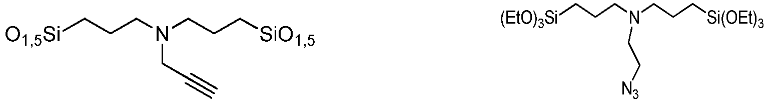

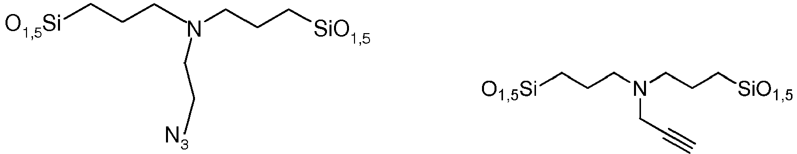

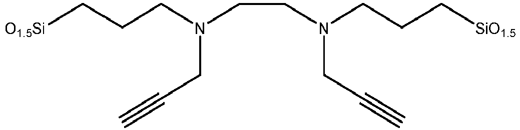

L'invention a également pour objet un procédé de préparation d'un composé de formule (IIa) 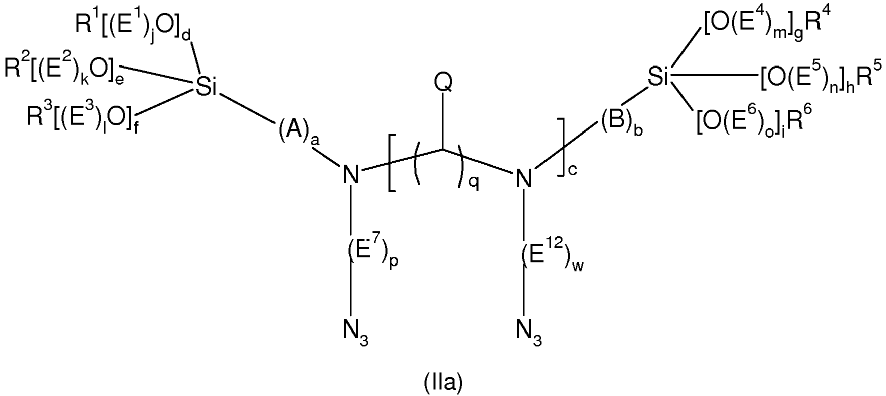 dans laquelle :
- E⁷ et E¹² sont identiques,
- p et w sont identiques,
- les définitions et caractéristiques préférées de R¹, R², R³, R⁴, R⁵, R⁶, E¹, E², E³, E⁴, E⁵, E⁶, E⁷, E¹², A, B, Q, a, b, c, d, e, f, g, h, i, j, k, l , m, n, o, p, q et w sont telles que précisé ci-dessus pour les composés de formule (IIa) ;
par réaction entre un composé de formule (IX) 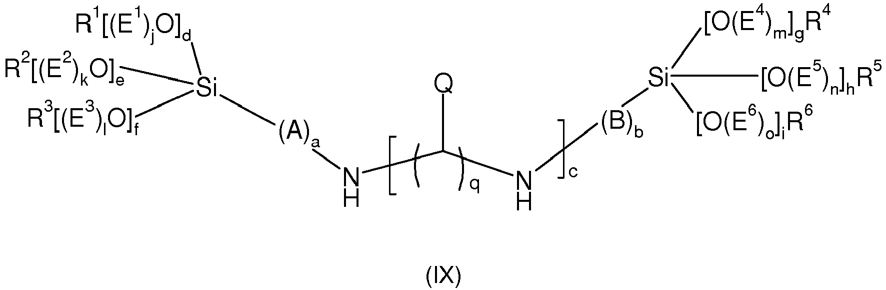 dans laquelle les définitions et caractéristiques préférées de R¹, R², R³, R⁴, R⁵, R⁶, E¹, E², E³, E⁴, E⁵, E⁶, A, B, Q, a, b, c, d, e, f, g, h, i, j, k, l , m, n et o et q tel que données ci-dessus s'appliquent aux composés de formule (IX) ;
et un composé de formule (X) 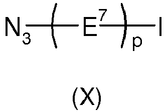 Selon l'invention, la réaction peut être effectuée entre un équivalent de composé de formule (IX) et (c + 1) équivalents de composé de formule (X) en présence de 2 × (c+1) équivalents de carbonate de potassium.
Selon l'invention, la définition de c est identique à la définition de c pour le composé de formule (IX) et peut ainsi représenter 0, 1, 2 ou 3.

Selon l'invention, la réaction entre le composé de formule (IX) et le composé de formule (X) a lieu en solution en présence de carbonate de potassium.

Selon l'invention, la teneur en composé de formule (IX) dans la solution peut aller de 0,001 à 1 mol/L, de préférence de 0,1 à 0,2 mol/L.

Selon l'invention, la réaction peut être effectuée en présence d'un solvant, de préférence d'acétonitrile.

Selon l'invention, la réaction peut être effectuée à 85°C et sous atmosphère inerte pendant une durée allant de 15 à 24h.

L'invention a également pour objet un procédé de préparation d'un composé de formule (IIb) 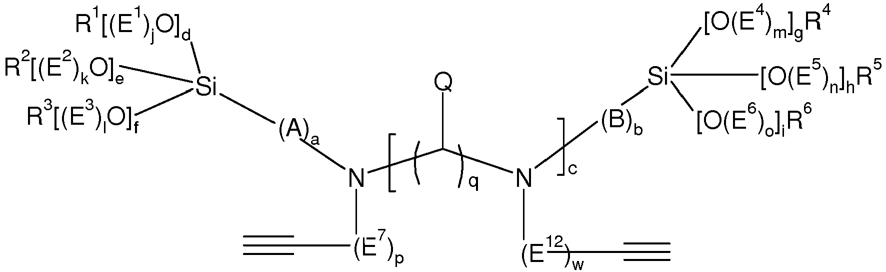 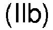 dans laquelle :
- E⁷ et E¹² sont identiques,
- p et w sont identiques,
- les définitions et caractéristiques préférées de R¹, R², R³, R⁴, R⁵, R⁶, E¹, E², E³, E⁴, E⁵, E⁶, E⁷, E¹², A, B, Q, a, b, c, d, e, f, g, h, i, j, k, l , m, n, o, p, q et w sont telles que données ci-dessus ;
par réaction entre un composé de formule (XI) 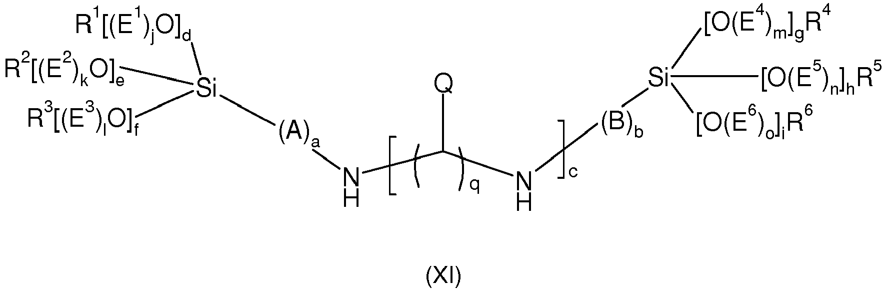 dans laquelle les définitions et caractéristiques préférées de R¹, R², R³, R⁴, R⁵, R⁶, E¹, E², E³, E⁴, E⁵, E⁶, A, B, Q, a, b, c, d, e, f, g, h, i, j, k, l , m, n et o et q données ci-dessus s'appliquent aux composés de formule (XI) ;
et un composé de formule (XII)

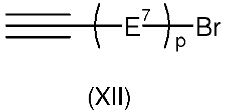

Selon l'invention, la réaction peut être effectuée entre un équivalent de composé de formule (XI) et (c + 1) équivalents de composé de formule (XII) en présence de 2 × (c+1) équivalents d'hydrure de calcium.

Selon l'invention, la définition de c est identique à la définition de c pour le composé de formule (XI) et peut ainsi représenter 0, 1, 2 ou 3.

Selon l'invention, la réaction entre le composé de formule (XI) et le composé de formule (XII) a lieu en solution en présence d'hydrure de calcium.

Selon l'invention, la teneur en composé de formule (XI) dans la solution peut aller de 0,001 à 1 mol/L, de préférence de 0,1 à 0,5 mol/L.

Selon l'invention, la réaction peut être effectuée en présence d'un solvant, de préférence de tétrahydrofurane.

Selon l'invention, la réaction peut être effectuée à une température allant de 15 à 30°C et sous atmosphère inerte pendant une durée allant de 15 à 24h.

L'invention a également pour objet un procédé de préparation d'un composé de formule (IIc) 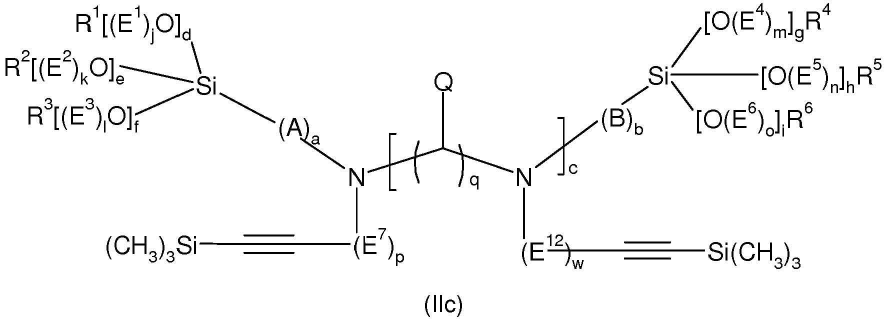 dans laquelle :
- E⁷ et E¹² sont identiques,
- p et w sont identiques,
- les définitions et caractéristiques préférées de R¹, R², R³, R⁴, R⁵, R⁶, E¹, E², E³, E⁴, E⁵, E⁶, E⁷, E¹², A, B, Q, a, b, c, d, e, f, g, h, i, j, k, l , m, n, o, p, q et w sont telles que données ci-dessus ;
par la réaction entre un composé de formule (XIII) 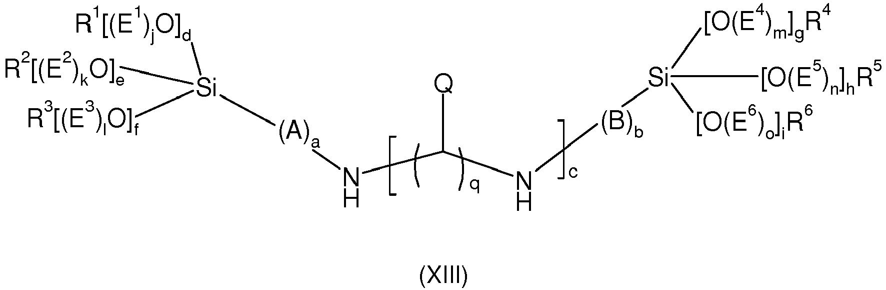 dans laquelle les définitions et caractéristiques préférées de R¹, R², R³, R⁴, R⁵, R⁶, E¹, E², E³, E⁴, E⁵, E⁶, A, B, Q, a, b, c, d, e, f, g, h, i, j, k, l , m, n et o et q telles que données ci-dessus s'appliquent aux composés de formule (XIII) ;
et un composé de formule (XIV)

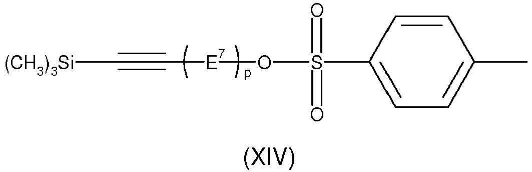

Selon l'invention, la réaction peut être effectuée entre un équivalent de composé de formule (XIII) et (c + 1) équivalents de composé de formule (XIV) en présence de 2 × (c+1) équivalents de carbonate de potassium.

Selon l'invention, la définition de c est identique à la définition de c pour le composé de formule (XIIII) et peut ainsi représenter 0, 1, 2 ou 3.

Selon l'invention, la réaction entre le composé de formule (XIII) et le composé de formule (XIV) a lieu en solution en présence de carbonate de potassium.

Selon l'invention, la teneur en composé de formule (XIII) dans la solution peut aller de 0,001 à 1 mol/L, de préférence de 0,1 à 0,2 mol/L.

Selon l'invention, la réaction peut être effectuée en présence d'un solvant, de préférence d'acétonitrile.

Selon l'invention, la réaction peut être effectuée à 85°C et sous atmosphère inerte pendant une durée allant de 15 à 24h.

Les différents aspects de l'invention sont illustrés par les exemples qui suivent. Ces exemples sont donnés à titre indicatif, sans caractère limitatif.

Toutes les manipulations ont été effectuées en utilisant les techniques standards de Schlenk sous atmosphère inerte.

Les spectres RMN liquide ont été obtenus sur des appareils Bruker fonctionnant à 400 ou 250 MHz, dans du CDCl₃ sec à 298 K.
Les spectres RMN solide ont été mesurés sur un appareil Varian ASX 400.
Les déplacements chimiques en ¹H et ¹³C et ²⁹Si sont rapportés en ppm par rapport à Me₄Si.
Les spectres de masse à haute résolution ont été réalisés par ionisation electrospray. Les spectres infrarouge ont été obtenus en ATR sur un spectromètre Perkin 100. Les ATG ont été obtenues avec un gradient de température de 10 °C/min.
Les diffractogrammes de rayons X ont été obtenus au Laboratoire Charles Coulomb de Montpellier en utilisant un rayonnement monochromatique CuKα.

### Exemple 1 : synthèse de la prop-2-ynyl-bis-(3-triéthoxysilyl-propyl)-amine

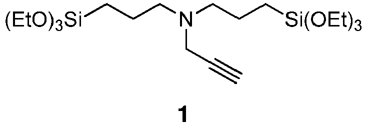

A une solution de bis(triéthoxysilylpropyl)amine (12,8 g, 30,0 mmol) dans du THF contenant 1000 ppm d'eau (150 mL), de l'hydrure de calcium (3.16 g, 75 mmol) puis du bromure de propargyle (80% dans le toluène, 4,28 g, 36,0 mmol) ont été ajoutés successivement. Le milieu réactionnel a été agité pendant 16 h à température ambiante. Après évaporation des solvants, extraction du mélange réactionnel avec du pentane et concentration, une huile jaune visqueuse a été obtenue, puis purifiée par distillation sous pression réduite (130°C/2.10⁻² mbar) pour donner le composé **1** sous la forme d'une huile incolore (13,2 g, 28,4 mmol). rendement : 95 %.
RMN ¹H (250 MHz, CDCl₃) δ = 3,81 (q, *J* = 7.0 Hz, 12H), 3,38 (d, *J* = 2,3 Hz, 2H), 2,56 - 2,34 (m, 4H), 2,13 (t, *J* = 2,3 Hz, 1H), 1,65- 1,46 (m, 4H), 1,21 (t, *J* = 7,0 Hz, 18H), 0,66-0,56 (m, 4H). RMN ¹³C NMR (101 MHz, CDCl₃) δ = 79,0, 72,5, 58,4, 56,7, 41,8, 21,0, 18,4, 8,1.
HRMS (ESI+):
m/z calculé pour C₂₁H₄₆NO₆Si₂⁺ : 464,2864;
m/z déterminé : 464,2871.

### Exemple 2 : synthèse de la N,N'-di-prop-2-ynyl-N,N'-bis-(3-triéthoxysilyl-propyl)-ethane-1,2-diamine

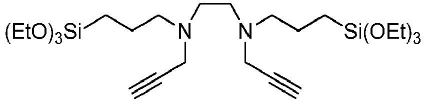

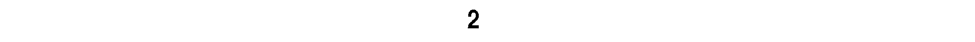

A une solution de *N*,*N'*-bis(3-triéthoxysilylpropyl)éthane-1,2-diamine (4,41 g, 9,4 mmol) dans du THF contenant 1000 ppm d'eau (40 mL), de l'hydrure de calcium (1,7 g, 37,5 mmol) puis du bromure de propargyle (80% dans le toluène, 3,49 g, 23,5 mmol) ont été ajoutés successivement. Le mélange réactionnel a été agité pendant 16 h à température ambiante. Après évaporation des solvants, extraction du mélange réactionnel au pentane et concentration, le composé **2** sous la forme d'une huile visqueuse a été obtenu (4,9 g, 9,0 mmol). rendement : 96 %
RMN ¹H (250 MHz, CDCl₃) δ = 3,68 (q, *J* = 7,0 Hz, 12H), 3,32 (d, *J* = 2,2 Hz, 4H), 2,48 (s, 4H), 2,39 - 2,30 (m, 4H), 2,06 (t, *J* = 2,3 Hz, 2H), 1,52 - 1,35 (m, 4H), 1,09 (t, *J* = 7,0 Hz, 18H), 0,53 - 0,42 (m, 4H). ¹³C NMR (63 MHz, CDCl₃) δ = 78,6, 72,7, 58,2, 57,0, 51,2, 41,9, 20,7, 18,2, 7,8.
HRMS (ESI+):
m/z calculé pour C₂₆H₅₃N₂O₆Si₂⁺ : 545,3442;
m/z déterminé : 545,3440.

### Exemple 3 : synthèse de la (3-azidopropyl)-bis-(3-triéthoxysilyl-propyl)-amine

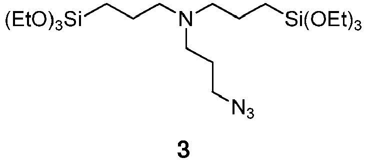

Un mélange de bis(triéthoxysilylpropyl)amine (1,0 g, 2,3 mmol), 3-azido-1-idopropane (0,48 g, 2,3 mmol) et de carbonate de potassium (0,63 g, 4.6 mmol) dans l'acétonitrile (grade HPLC, 20 mL) a été agité pendant 16 h à 85°C dans un tube scellé sous azote. Le mélange a été filtré, puis le filtrat a été concentré, pour donner le composé **3** sous la forme d'une huile jaunâtre (1,1 g, 2,2 mmol). rendement : 93 %.
RMN ¹H (250 MHz, CDCl₃) δ = 3,80 (q, *J* = 7,0 Hz, 12H), 3,31 (t, *J* = 6,8 Hz, 2H), 2,46 (t, *J* = 6,9 Hz, 2H), 2,38 (t, *J* = 6,9 Hz, 4H), 1,75 - 1,61 (m, 2H), 1,59 - 1,41 (m, 4H), 1,21 (t, *J* = 7,0 Hz, 18H), 0,61 - 0,49 (m, 4H). RMN ¹³C (63 MHz, CDCl₃) δ = 58,5, 57,2, 51,1, 49,8, 26,9, 20,4, 18,4, 8,1.
HRMS (ESI+):
m/z calculé pour C₂₁H₄₉N₄O₆Si₂ : 509,3191 ;
m/z déterminé : 509,3174.

### Exemple 4 : synthèse de la N,N'-bis-(3-azidopropyl)-N,N'-bis-(3-triéthoxysilyl-propyl-ethane-1,2-diamine

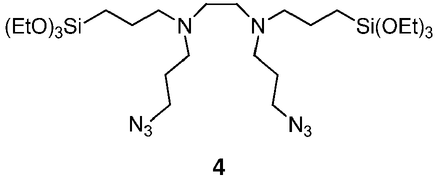

Un mélange de *N*,*N'*-bis(triéthoxysilylpropyl) ethane-1,2-diamine (0,9 g, 1,9 mmol), 3-azido-1-iodopropane (0,8 g, 3,8 mmol) et de carbonate de potassium (1,1 g, 7,7 mmol) dans l'acétonitrile (grade HPLC, 15 mL) a été agité pendant 16 h, à 85°C, dans un tube scellé sous azote. Le mélange a été filtré, puis le filtrat a été concentré, pour donner le composé **4** sous la forme d'une huile jaunâtre (0,99 g, 1,6 mmol).
rendement: 82 %.
RMN ¹H (250 MHz, CDCl₃) δ = 3,80 (q, *J* = 7,0 Hz, 12H), 3,31 (t, *J* = 6,8 Hz, 4H), 2,54 - 2,46 (m, 8H), 2,38 (t, *J* = 6,9 Hz, 4H), 1,75 - 1,61 (m, 4H), 1,59 - 1,41 (m, 4H), 1,21 (t, *J* = 7,0 Hz, 18H), 0,61 - 0,49 (m, 4H). RMN ¹³C (63 MHz, CDCl₃) δ = 58,4, 57,7, 52,6, 51,5, 49,7, 26,9, 20,5, 18,4, 8,0.
HRMS (ESI+):
m/z calculé pour C₂₆H₅₉N₈O₆Si₂ :635,4096;
m/z déterminé : 635,4089.

### Exemple 5 : synthèse de la prop-2-ynyl-bis-(3-(diéthoxy)(methyl)silyl-propyl)-amine

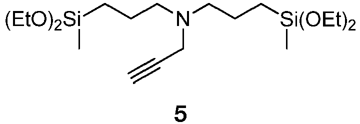

A une solution de bis(diéthoxyméthylsilylpropyl)amine (2,0 g, 4,9 mmol) dans du THF contenant 1000 ppm d'eau (20 mL), de l'hydrure de calcium (0,6 g, 12,3 mmol) puis du bromure de propargyle (80% dans le toluène, 1,1 g, 7,4 mmol) ont été ajoutés successivement. Le milieu réactionnel a été agité pendant 16 h, à température ambiante. Après évaporation des solvants, extraction du mélange réactionnel avec du pentane et concentration, le composé **5** a été obtenu sous la forme d'une huile jaune visqueuse (1,8 g, 4,6 mmol).
rendement: 93 %.
RMN ¹H (250 MHz, CDCl₃) δ = 3,75 (q, *J* = 7,0 Hz, 8H), 3,39 (d, *J* = 2,3 Hz, 2H), 2,45 (t, *J* = 7,5 Hz, 4H), 2,14 (t, *J* = 2,3 Hz, 1H), 1,58 - 1,41 (m, 4H), 1,20 (t, *J* = 7,0 Hz, 12H), 0,63 - 0,54 (m, 4H), 0,11 (s, 6H). RMN ¹³C (63 MHz, CDCl₃) δ = 78,9, 72,6, 58,2, 56,9, 41,9, 21,0, 18,5, 11,5, -4,8.
HRMS (ESI+):
m/z calculé pour C₁₉H₄₂NO₄Si₂ :404,2652;
m/z : déterminé, 404,2648.

### Exemple 6 : synthèse de la (3-trimethylsilyl-prop-2-ynyl)-bis-(3-triéthoxysilyl-propyl)-amine

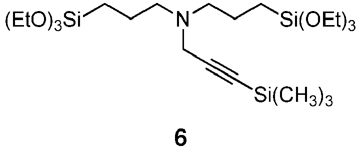

Un mélange de bis(triéthoxysilylpropyl)amine (1,0 g, 2,3 mmol), de carbonate de potassium (0,65 g, 4,7 mmol) et de tosylate de 3-(trimethylsilyl)prop-2-ynyl (0,66 g, 2,3 mmol) dans l'acétonitrile (20 mL) a été agité pendant 15 heures, à 85 °C, dans un tube scellé. Après refroidissement à température ambiante, le mélange a été filtré, puis le filtrat a été concentré pour donner le composé **6** sous la forme d'une huile jaune (1,2 g, 2,2 mmol). rendement : 94%.
RMN ¹H (400 MHz, CDCl₃) δ = 3,81 (q, *J* = 7,0 Hz, 12H), 3,38 (s, 2H), 2,44 (t, *J* = 8,0 Hz, 4H), 1,59 - 1,48 (m, 4H), 1,21 (t, *J* = 7,0 Hz, 18H), 0,63 - 0,57 (m, 4H), 0.,4 (s, 9H). RMN ¹³C (101 MHz, CDCl₃) δ = 101,5, 89,2, 58,3, 56,7, 42,9, 20,8, 18,3, 8,0, 0,1.
HRMS (ESI+):
m/z calculé pour C₂₄H₅₄NO₆Si₃ : 536,3259;
m/z déterminé : 536,3242.

### Exemple 7 : synthèse d'un matériau organosilicié à fonction alcyne obtenu à partir du composé 1

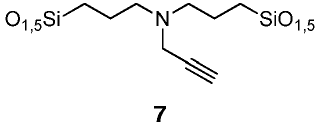

La synthèse a été adaptée d'un procédé décrit dans Corriu et *al* (Corriu et al, Chem. Mater. 1992, 4(6), 1217-1224).

Pour cela, le composé **1** de l'exemple 1 (0,8 g ; 1,7 mmol) a été dissous dans de l'éthanol absolu (6,4 mL, 108 mmol). Sous agitation forte, du fluorure d'ammonium (0,64 mL, solution à 1 M dans l'eau, 0,64 mmol) est ensuite ajouté avec de l'eau distillée (0,34 g, 19 mmol).

Le rapport molaire final était : composé **1**/NH₄F/H₂O/EtOH: 1/0,38/11/63.

Après 1 minute sous agitation, le mélange a été laissé au repos pendant 4 jours à température ambiante. Un gel a été obtenu. Il a été broyé sur une plaque filtrante, essoré, lavé à l'eau, à l'éthanol puis à l'acétone, puis séché sous pression réduite (0,1 mbar) pour donner une poudre jaune pâle.
Infrarouge (cm⁻¹) : 880, 1025, 1390, 2820, 2888, 2930, 3290.

### Exemple 8 : synthèse d'un matériau organosilicié porteur à la fois de fonctions pyrène et alcyne obtenu à partir du composé 1 par catalyse nucléophile et réaction click in situ

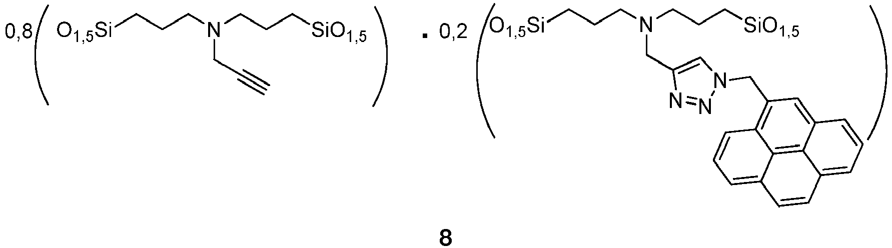

Le composé **1** de l'exemple 1 (0,8 g ; 1,7 mmol), de l'azidométhylpyrène (0,1 g, 0,34 mmol) et de l'ascorbate de sodium (0,025 g, 0,13 mmol) ont été mélangés dans de l'éthanol absolu (6,4 mL, 108 mmol). Sous agitation forte, un mélange de fluorure d'ammonium (0,06 mL, solution à 1 M dans l'eau, 0,06 mmol), d'eau distillée (0,34 g, 19 mmol) et de catalyseur CuBr(PPh₃)₃ (0,06 g, 0,06 mmol) dans le THF (0,5 g, 6,9 mmol) a été ajouté.

Le rapport molaire final était : composé **1**/NH₄F/H₂O /EtOH/azidométhylpyrène/ascorbate/Cu/THF = 1:0,04:11:63:0,2:0,08:0,04:4. Après 1 minute sous agitation, le mélange a été laissé pendant 3 jours à température ambiante. Un gel a été obtenu. Il a été broyé sur une plaque filtrante, essoré, lavé à l'eau, à l'éthanol puis à l'acétone, puis séché pour donner une poudre jaune pâle.
Infrarouge (cm⁻¹) : 849, 880, 1025, 1295, 1390, 1590, 1640, 2820, 2888, 2930, 2970, 3290.

### Exemple 9 : synthèse d'un matériau organosilicié mésostructuré à partir du composé 1

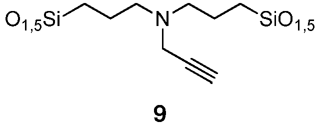

La synthèse a été adaptée d'un procédé décrit dans Nguyen et al (Nguyen et al, J. Mater. Chem. 2010, 20 (19), 3910-3917).
Une solution d'hexadécylesulfate de sodium (SHS, ABCR n° AB136610, 531 mg, 1,5 mmol), de HCl 1 N (4 mL, 4 mmol) dans 36 mL d'eau distillée (2 mol) a été portée à 60°C.
Le composé **1** de l'exemple 1 (0,72 g ; 1,6 mmol) a ensuite été ajouté.
Le rapport molaire final était : composé **1**/HCl/SHS/H₂O :1/2,5/1/1250.
Un précipité est apparu après 2 min. Après 30 min sous agitation à 60 °C, le mélange a été refroidi, filtré, séché à l'étuve à 50°C pendant 6 h puis sous pression réduite (0,1 mbar) à température ambiante, pendant 15 h.
L'analyse élémentaire du matériau après synthèse est la suivante : H : 8,1% ; C : 53% ; N : 2,3% ; S : 6,5%.
Après 24 h d'extraction en continu au Soxhlet (10 mL HCI 37% pour 200 mL d'EtOH) puis séchage (50°C à pression atmosphérique, 6 h, puis 20 °C sous pression réduite, 16 h), le matériau a été obtenu sous la forme d'une poudre blanche.
Analyse élémentaire après extraction : H : 4,7% ; C : 28% ; N : 3,5% ; S : 0%
InfraRouge (cm⁻¹) : 875, 1006, 1430, 2827, 2888, 2937, 2940, 3298.
RMN du solide CPMAS :
²⁹Si (δ, ppm) : -58,3 (T²) ; -67,0 (T³) ; degré de condensation : 88%.
¹³C (δ, ppm) : 79 ; 75 ; 56 ; 43 ; 21 ; 11
La présence d'une bande IR à 3298 cm⁻¹ ,ainsi que de signaux en ¹³C à 79 ppm et 75 ppm confirment la présence de la fonction alcyne dans le matériau de formule 9.

Par diffraction des rayons X appliquée au matériau ainsi obtenu, un pic de Bragg à 1,97 nm⁻¹ (distance de répétition de 3,2 nm) est obtenu.
Cette valeur permet de confirmer que le matériau se présente sous une forme mésostructurée.

Par analyse thermogravimétrique appliquée au matériau ainsi obtenu, ont été obtenus :
- une perte de masse de 14% entre 200 et 363 °C ;
- une perte de masse de 28 % entre 365 et 700 °C.
- un résidu : 57 % à 800 °C.
Ces valeurs permettent de confirmer la stabilité thermique du matériau obtenu.
Les images de microscopie électronique à balayage ont montré un agrégat de microfibres. En microscopie électronique en transmission, des fibres courbées de 1 à 5 µm de long et 70 à 150 nm de diamètre et à porosité longitudinale ont été caractérisées.

### Exemple 10 : synthèse de la 2-azidoéthyl)bis(triéthoxysilyl-propyl)amine

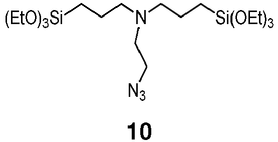

Un mélange de 1-iodo-2-azidoéthane (5,2 g , 30 mmol), de bis-(triéthoxysilylpropyl)amine (13 g, 30 mmol), de carbonate de potassium (8,2 g , 60 mmol) dans 200 mL d'acétonitrile a été agité dans un tube scellé, sous argon à 85°C, pendant 18 h. Ensuite, le solvant a été évaporé sous pression réduite, le produit a été extrait au pentane puis concentré sous vide pour donner le précurseur **10.**
RMN ¹H : 3,80 (q, 12H) ; 3,25 (t, 2H) ; 2,65 (t, 2H) ; 2,45 (t, 4H) ; 1,55 (q, 4H) ; 1,20 (t, 18H) ; 0,60 (t, 4H).
RMN ¹³C : 58,3 ; 57,3 ; 53,5 ; 49,5 ; 20,4 ; 18,2 ; 7,8.
HRMS ESI+:
m/z calculé pour C₂₀H₄₇N₄O₆Si₂⁺ : 495,3016,
m/z déterminé : 495,3034.

### Exemple 11 : synthèse d'un matériau organosilicié à fonctions azoture obtenu par catalyse nucléophile à partir du précurseur 10 de l'exemple 10

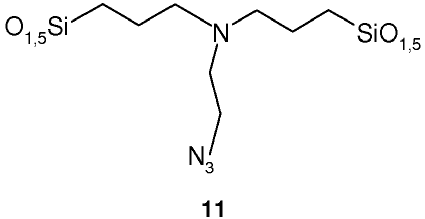

Le précurseur **10** (0,85 g ; 1,7 mmol) a été dissous dans de l'éthanol absolu (6,4 mL, 108 mmol). Sous agitation forte, du fluorure d'ammonium (0,32 mL, solution à 1M dans l'eau, 0,32 mmol) a ensuite été ajouté avec de l'eau distillée (0,34 g, 19 mmol). Le rapport molaire final était : composé **10**/NH₄F/H₂O/EtOH: 1/0.19/11/63.
Après 1 minute sous agitation, le mélange a été laissé au repos pendant 2 jours à température ambiante. Un gel a été obtenu. Il a été broyé sur une plaque filtrante, essoré, lavé à l'eau, à l'éthanol puis à l'acétone, puis séché sous pression réduite (0.1 mbar) pour donner une poudre blanche.
IR(cm⁻¹) : 2937, 2880, 2819, 2097, 1468, 1407, 1346, 1275, 1093, 1006, 917, 743, 691
La présence d'une bande IR à 2097 cm⁻¹ confirme la présence de fonctions azotures dans le matériau de formule **11.**

### Exemple 12 : synthèse d'un matériau organosilicié à fonctions azoture et ester obtenu par catalyse nucléophile er réaction click in situ à partir du précurseur 10 de l'exemple 10

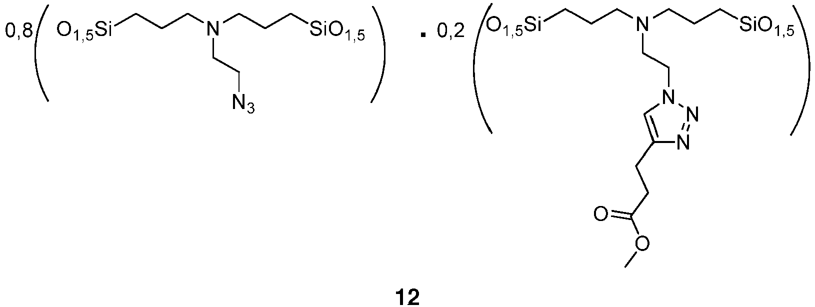

Le précurseur **10** (0,85 g ; 1,7 mmol), le pentynoate de méthyle (0,039 g, 0,34 mmol), et de l'ascorbate de sodium (0,025 g, 0,13 mmol) ont été mélangés dans de l'éthanol absolu (6,4 mL, 108 mmol).

Sous agitation forte, un mélange de fluorure d'ammonium (0,32 mL, solution à 1 M dans l'eau, 0.32 mmol), d'eau distillée (0,34 g, 19 mmol), et de catalyseur CuBr(PPh₃)₃ (0,06 g, 0,06 mmol) dans le THF (0,5 g, 6,9 mmol) ont été ajoutés. Le rapport molaire final était : composé **10**/NH₄F/ H₂O /EtOH/pentynoate de méthyle/ascorbate /Cu /THF: 1/0.19/11/63/0.2/0.08/0.04/4.

Après 1 minute sous agitation, le mélange a été laissé pendant 2 jours à température ambiante. Un gel a été obtenu. Il a été broyé sur une plaque filtrante, essoré, lavé à l'eau, à l'éthanol puis à l'acétone, puis séché pour donner une poudre gris clair.
IR(cm⁻¹) : 2937, 2880, 2819, 2097, 1734, 1468, 1441, 1407, 1346, 1275, 1093, 1006, 917, 743, 691

La présence d'une bande IR à 2097 cm⁻¹ confirme la présence de fonctions azoture dans le matériau de formule **12.**

La présence d'une bande IR à 1734 cm⁻¹ confirme la présence de fonctions esters dans le matériau de formule **12.**

### Exemple 13 : synthèse d'un matériau organosilicié mésostructuré à partir du composé 10 de l'exemple 10

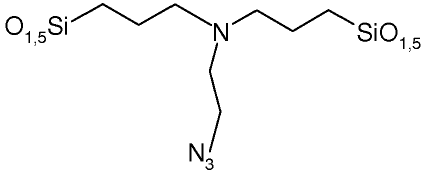

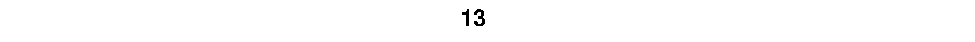

Une solution de d'hexadécylesulfate de sodium (SHS, ABCR cat number AB136610, 531 mg, 1,5 mmol), de HCl 1 N (4 mL, 4 mmol) dans 36 mL d'eau distillée (2 mol) a été portée à 60 °C.

Le précurseur **10** (1,5 g ; 3 mmol) a ensuite été ajouté. Le rapport molaire final était : composé **10**/HCl/SHS/H₂O : 1/1.25/0.5/625. Un précipité est apparu après 2 min. Après 30 min sous agitation à 60 °C, le mélange a été refroidi, filtré, séché à l'étuve à 50 °C pendant 6 h puis sous pression réduite (0,1 mbar) à température ambiante pendant 15 h. Après 24 h d'extraction en continu au Soxhlet (10 mL HCI 37% pour 200 mL d'EtOH), la poudre a été agitée pendant une nuit dans une solution de (200 mL éthanol + 12 mL NH₄OH 28% dans l'eau). Le matériau a finalement été séché (50 °C, 6 h puis pression réduite, 16 h), il a été obtenu sous la forme d'une poudre blanche.
IR(cm⁻¹) : 2937, 2880, 2819, 2097, 1468, 1407, 1346, 1275, 1093, 1006, 917, 743, 691.

### Exemple 14 : synthèse d'un matériau organosilicié à fonctions alcynes obtenu à partir du composé 2

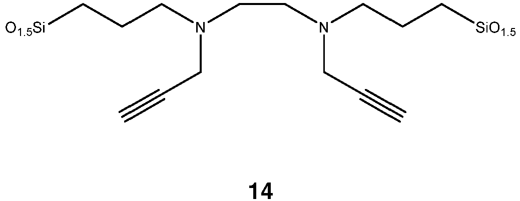

Le composé **2** (0,16 mmol) a été ajouté sous forte agitation à un mélange de CTAB (46 mg, 0,13 mmol), d'eau distillée (17,5 mL, 0,97 mol), du propan-1-ol (2 mL, 27 mmol) et de NH₄OH (25% massique en NH₃, 0,5 mL, 6,5 mmol) préalablement chauffé à 50°C.

La composition du mélange était de **2**/CTAB/ propan-1-ol /NH₃/H₂O = 1 : 0,78 : 197 : 40 : 4900

Après 24 heures d'agitation, le mélange a été centrifugé et le précipité a été lavé 3 fois à l'éthanol puis extrait au soxhlet avec une solution de 5 mL acide chlorhydrique 12 M dans 100 mL éthanol à reflux pendant 48 heures.

Le produit ainsi obtenu a été caractérisé de la façon suivante :
IR (nombre d'ondes en cm⁻¹) : 917, 1018, 1093, 1259, 1322, 1433, 1465, 2819, 2930, 3290.

### Exemple 15 : synthèse d'un matériau organosilicié à fonctions alcynes obtenu à partir du composé 2 en présence d'un tensioactif

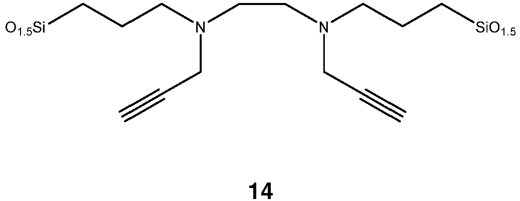

Le composé **2** (1 mmol) a été ajouté sous forte agitation à un mélange de bromure d'hexadécyl triméthylammonium (CTAB) (0,29 g , 0,8 mmol), d'eau distillée (17 mL, 0,97 mol) et de NH₄OH (25% en masse, 2,3 mL, 30 mmol) chauffé à 70°C.

La composition du mélange était de **2**/CTAB /NH₃/H₂O = 1 : 0,79 : 30 : 1500

Après 24 heures d'agitation, l'eau a été évaporée pour donner le matériau (**14**). Le tensioactif a été extrait en lavant la poudre au soxhlet avec une solution de 5 mL acide chlorhydrique 12 M dans 100 mL éthanol à reflux pendant 48 heures.

Le produit ainsi obtenu a été caractérisé de la façon suivante :
IR (nombre d'ondes en cm⁻¹) : 1018, 1093, 1259, 1322, 1433, 1465, 2819, 2930, 3290

Exemple 16 : synthèse d'un matériau organosilicié à fonction alcyne obtenu à partir du composé **1** en présence d'un tensioactif

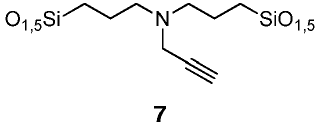

Un mélange de bromure d'hexadécyl triméthylammonium (CTAB) (0,1 g, 0,28 mmol), d'eau distillée (35 mL, 2 mol), d'hydroxyde d'ammonium (28%, 0,84 mL, 13 mmol) et de propan-1-ol (4 mL, 53 mmol) a été agité vigoureusement pendant 30 minutes à 50°C. Ensuite, le composé (**1**) (0,2 mL, 0,4 mmol) a été ajouté et le mélange a été agité à 50°C pendant 12 h.

La composition du mélange était de **1**/CTAB/propan-1-ol/NH₄OH/eau = 1 : 0,68 : 133 : 32 : 4660

Après centrifugation (16500 rpm, 20 min) le matériau (**7)** a été récupéré et lavé à l'eau et l'éthanol puis séché sous pression réduite. Le tensioactif a été extrait en lavant la poudre au soxhlet avec une solution de 5 mL d'acide chlorhydrique 12 M dans 100 mL éthanol à reflux pendant 48 heures.

Le produit ainsi obtenu a été caractérisé de la façon suivante :
IR (nombre d'ondes en cm⁻¹) : 744, 917, 1020, 1096, 1206, 1447, 2127 (alcyne), 2943, 3284.
Les images de microscopie électronique à balayage (MEB) montrent que le matériau **7** est sous la forme de nanoparticules sphériques dont le diamètre va de 100 à 180 nm.

Les images de microscopie électronique à transmission (MET) confirment que le matériau **7** est sous la forme de nanoparticules sphériques dont le diamètre va de 100 à 180 nm.

Le graphique de diffusion de lumière dynamique (DLS) montre une distribution de la taille des nanoparticules très étroite, d'environ 160 nm.

L'isotherme d'adsorption d'azote pour l'analyse de la texture du matériau **7** a été obtenu pour :
- une surface spécifique selon la méthode Brunauer, Emett et Teller (BET) de 443,3018 m²/g
- une surface spécifique selon la méthode Langmuir de 641,2277 m²/g.

## Revendications

1. Composé choisi parmi les composés de formule (IIa), (IIb), (IIc), (IIg-2), (7), (11), ou (14) : 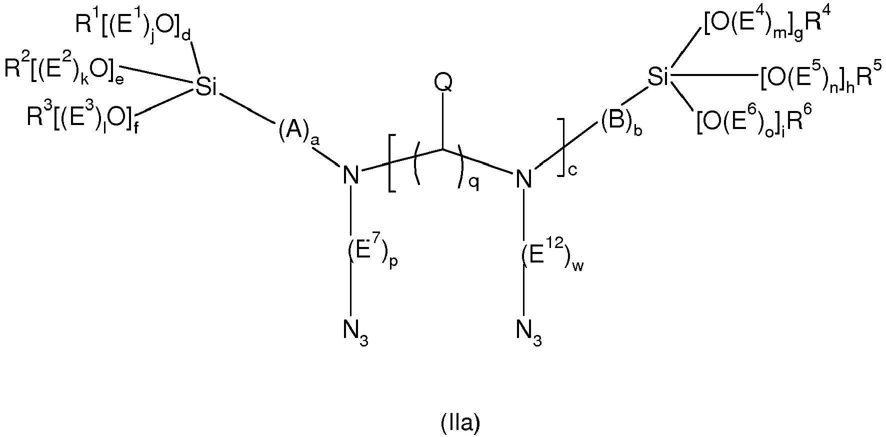 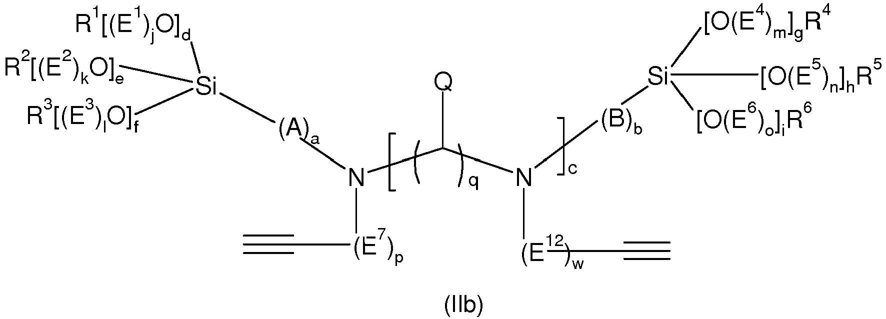 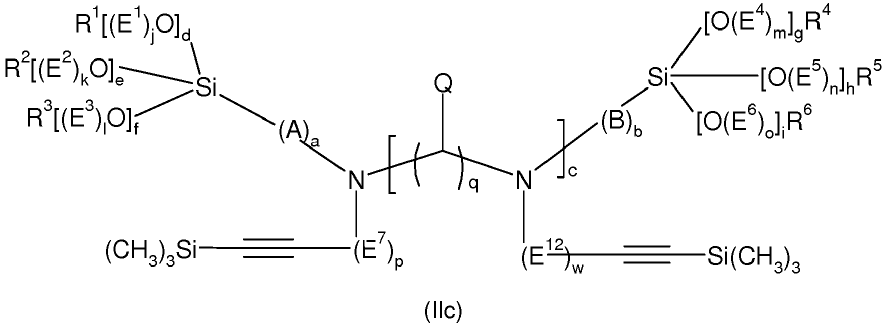 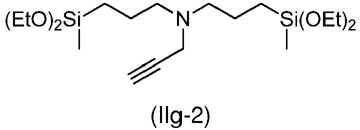 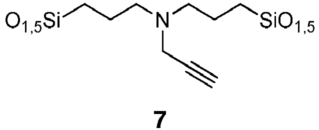 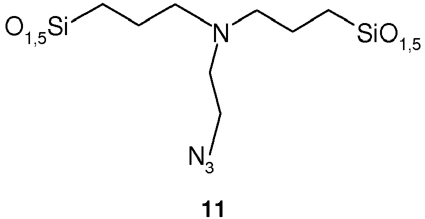 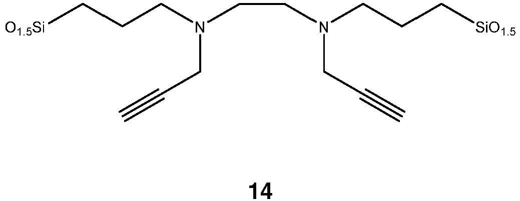 dans lesquels :
▪ R¹, R², R³, R⁴, R⁵ et R⁶, identiques ou différents, représentent un atome d'hydrogène, un groupement C₁-C₆-alkyle, un groupement aryl, un groupement C₁-C₆-alkoxy, un groupement C₃-C₈-alkylene-alcényl ;
▪ E¹, E², E³, E⁴, E⁵ et E⁶, identiques ou différents, représentent un groupement C₁-C₆-alkylene, C(O), C=CH₂, un groupement imino-C₁-C₆-alkyl, un groupement (C₁-C₆-alkyle)C=N- ;
▪ d, e, f, g, h, i, identiques ou différents, représentent 0, 1, 2, 3, 4, 5, 6 ;
▪ j, k, l, m, n, o, identiques ou différents, représentent 0, 1, 2, 3 ;
▪ A représente CH₂
▪ a représente 1, 2, 3, 4, 5, 6, 7, 8, 9, 10, 11 ou 12 ;
▪ B représente un groupement CH₂
▪ b représente 1, 2, 3, 4, 5, 6, 7, 8, 9, 10, 11 ou 12 ;
▪ c représente 0, 1, 2 ou 3 ;
▪ Q représente un atome d'hydrogène;
▪ q représente 0, 1, 2, 3 ou 4 ;
▪ E⁷ et E¹² identiques ou différents, représentent un groupement CR¹⁴R¹⁵, un groupement OCR¹⁶R¹⁷ ;
▪ R¹⁴, R¹⁵, R¹⁶, R¹⁷, identiques ou différents, représentent un atome d'hydrogène, un groupement C₁-C₆-alkyle, un groupement C₁-C₆-alkoxy, un groupement C₃-C₈-alkylene-alcényl, un groupement aryl, un groupement aryloxy ;
▪ p et w identiques ou différents, représentent 1, 2, 3, 4, 5, 6, 7, 8, 9, 10, 11 ou 12 ;
ainsi qu'un énantiomère ou un diastéréoisomère de ce composé.

2. Composé selon la revendication 1 choisi parmi les composés de formules (IIf), (IIg), (IIh), (IIi), (IIj) ou (IIk) : 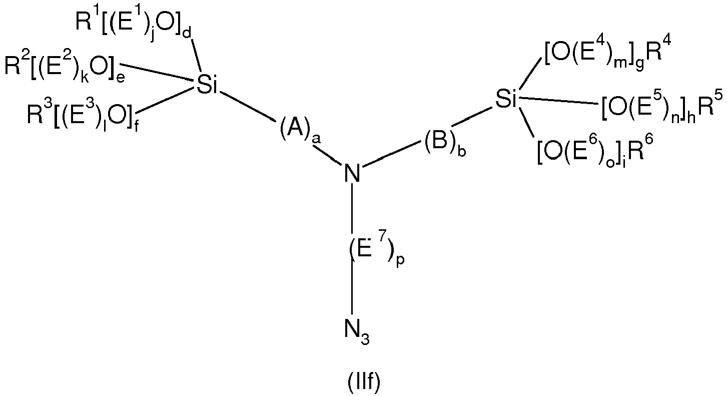 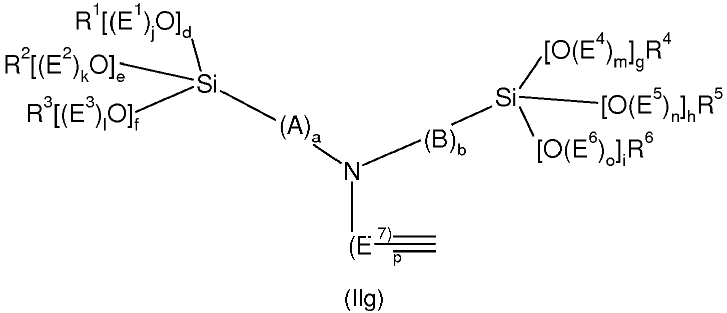 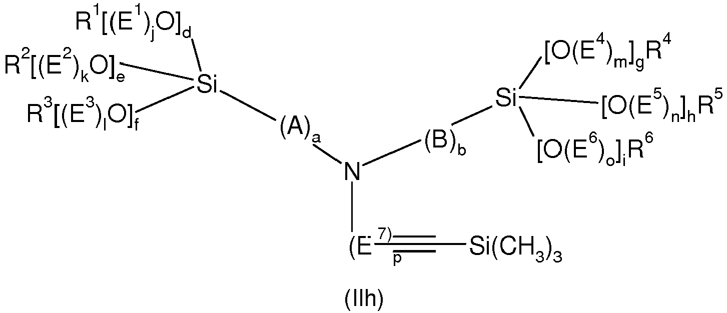 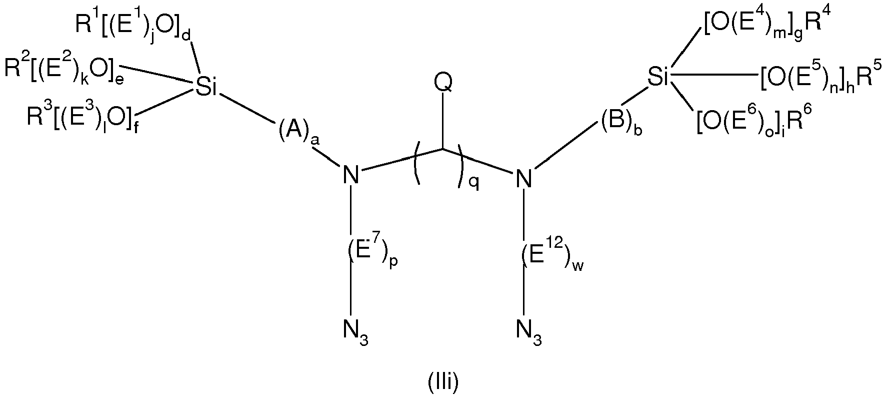 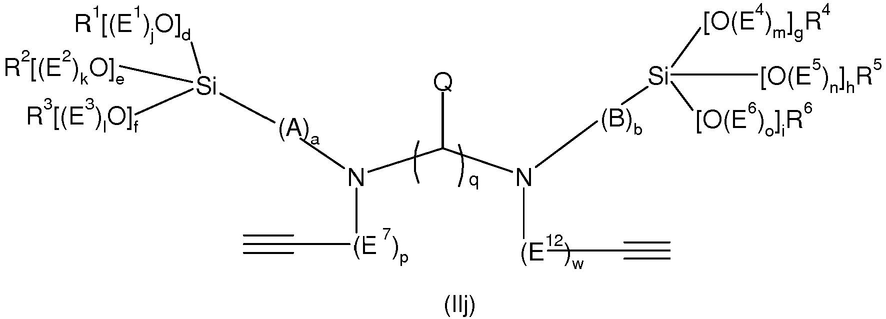 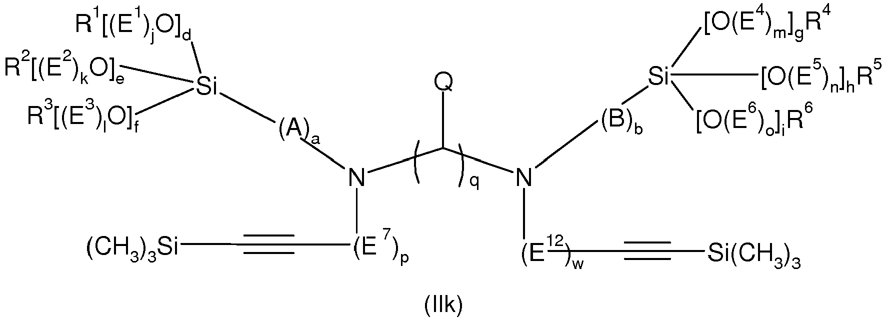 dans lesquelles R¹, R², R³, R⁴, R⁵, R⁶, E¹, E², E³, E⁴, E⁵, E⁶, E⁷, E¹², A, B, Q, a, b, c, d, e, f, g, h, i, j, k, l , m, n, o, p, q et w sont tels que définis dans la revendication 1.

3. Composé selon l'une des revendications 1 ou 2 dans lequel :
• R¹, R², R³, R⁴, R⁵ et R⁶ représentent indépendamment un groupement méthyle ou éthyle ; ou
• a représente 1, 2 ou 3 ; ou
• b représente 1, 2 ou 3 ; ou
• d, e, f, g, h et i, identiques ou différents, représentent 0 ou 1 ; ou
• j, k, l, m, n et o représentent 0 ; ou
• R⁷ représente un groupement méthyle, éthyle ou phényle ; ou
• R⁸ représente un groupement méthyle, éthyle ou phényle ; ou
• R⁹ représente un groupement méthyle, éthyle ou phényle.

4. Composé selon l'une quelconque des revendications 1 à 3 dans lequel :
• R¹, R², R³, R⁴, R⁵ et R⁶ représentent indépendamment un groupement méthyle ou éthyle ;
• a représente 1, 2 ou 3 ;
• b représente 1, 2 ou 3 ;
• q représente 0, 1 ;
• d, e, f, g, h et i, identiques ou différents, représentent 0 ou 1 ;
• j, k, l, m, n et o représentent 0.

5. Composé selon l'une quelconque des revendications 1 à 4, dans lequel c représente 0 ou 1.

6. Composé selon l'une quelconque des revendications 1 à 5 choisi parmi :

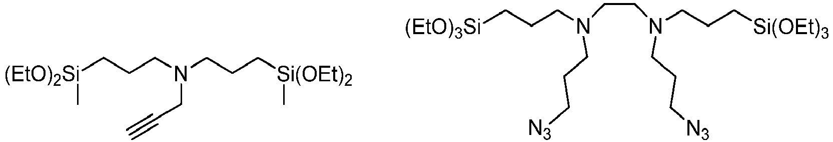

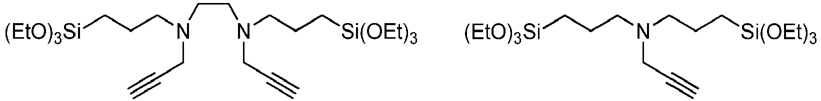

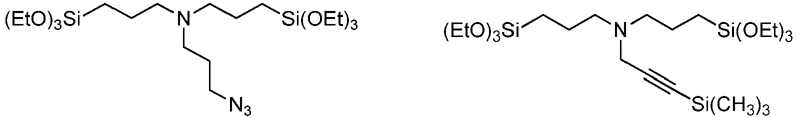

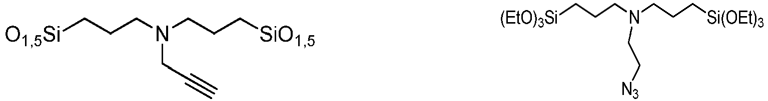

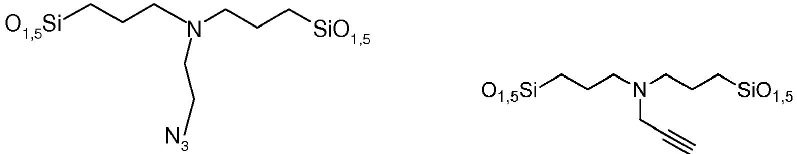

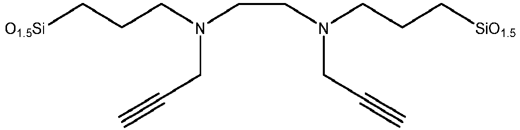

## Patentansprüche

1. Verbindung ausgewählt aus den Verbindungen (IIa), (IIb), (IIc), (IIg-2), (7), (11), oder (14): 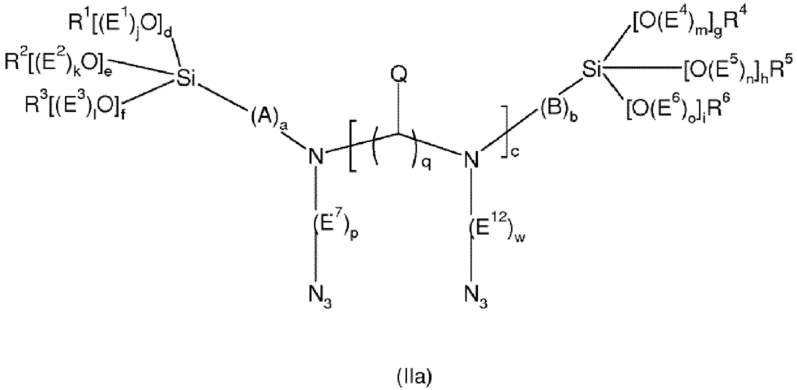 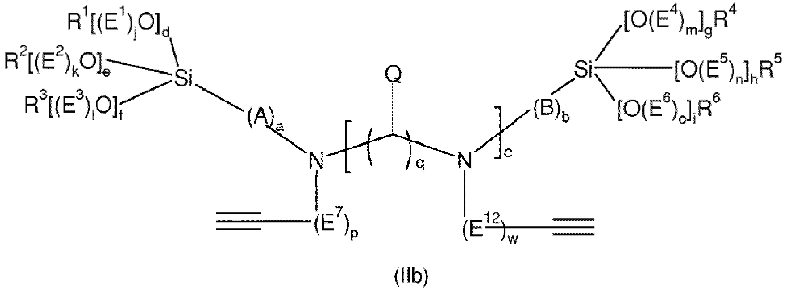 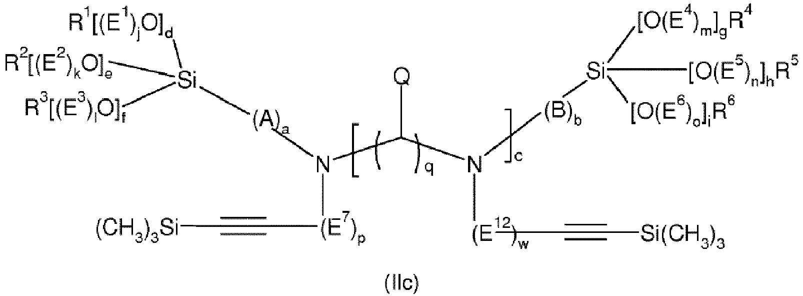 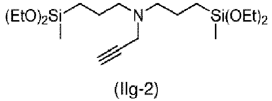 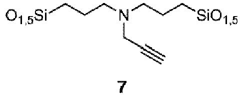 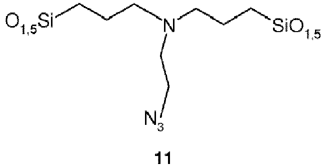 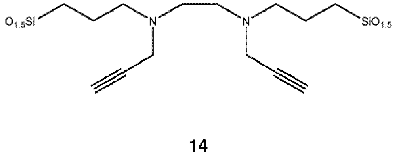 von denen:
• R¹, R², R³, R⁴, R⁵ und R⁶, identisch oder verschieden, ein Wasserstoffatom, eine C₁-C₆-Alkylgruppe, eine Arylgruppe, eine C₁-C₆-Alkoxygruppe, eine C₃-C₈-Alkylen-Alkenylgruppe darstellen;
• E¹, E², E³, E⁴, E⁵ und E⁶, identisch oder verschieden, eine C₁-C₆-Alkylengruppe, C(O), C=CH₂, eine Imino-C₁-C₆-Alkylgruppe, eine (C₁-C₆-Alkyl)C=N-Gruppe darstellen;
• d, e, f, g, h, i, identisch oder verschieden, 0, 1, 2, 3, 4, 5, 6 darstellen;
• j, k, l, m, n, o, identisch oder verschieden, 0, 1, 2, 3 darstellen;
• A CH₂ darstellt;
• a 1, 2, 3, 4, 5, 6, 7, 8, 9, 10, 11 oder 12 darstellt;
• B eine CH₂-Gruppe darstellt;
• b 1, 2, 3, 4, 5, 6, 7, 8, 9, 10, 11 oder 12 darstellt;
• c 0, 1, 2 oder 3 darstellt;
• Q ein Wasserstoffatom darstellt;
• q 0, 1, 2, 3 oder 4 darstellt;
• E⁷ und E¹², identisch oder verschieden, eine CR¹⁴R¹⁵-Gruppe, eine OCR¹⁶R¹⁷-Gruppe darstellen;
• R¹⁴, R¹⁵, R¹⁶, R¹⁷, identisch oder verschieden, ein Wasserstoffatom, eine C₁-C₆-Alkylgruppe, eine C₁-C₆-Alkoxygruppe, eine C₃-C₈-Alkylen-Alkenylgruppe, eine Arylgruppe, eine Aryloxygruppe darstellen;
• p und w, identisch oder verschieden, 1, 2, 3, 4, 5, 6, 7, 8, 9, 10, 11 oder 12 darstellen;
und auch ein Enantiomer oder ein Diastereoisomer dieser Verbindung.

2. Verbindung gemäß Anspruch 1 ausgewählt aus den Verbindungen der Formel (IIf), (IIg), (IIh), (IIi), (IIj) oder (IIk): 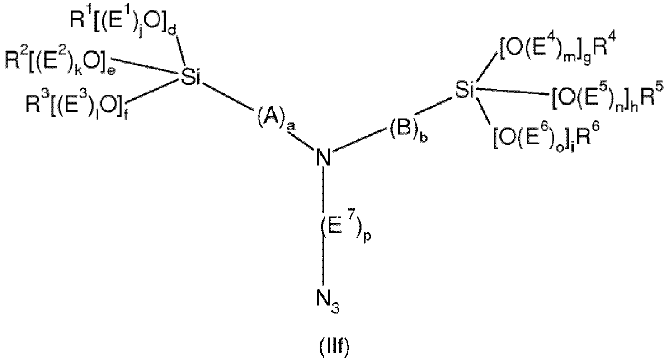 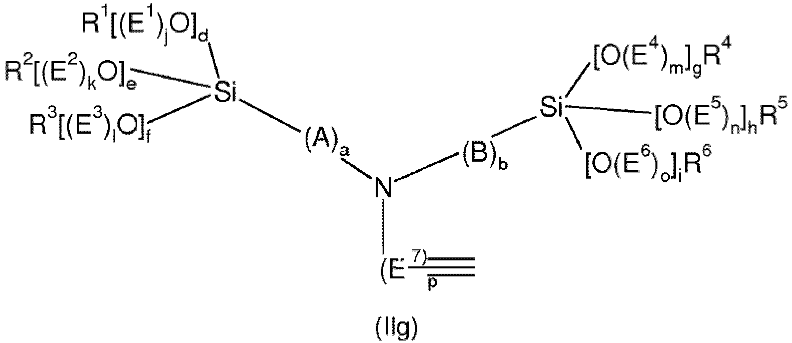 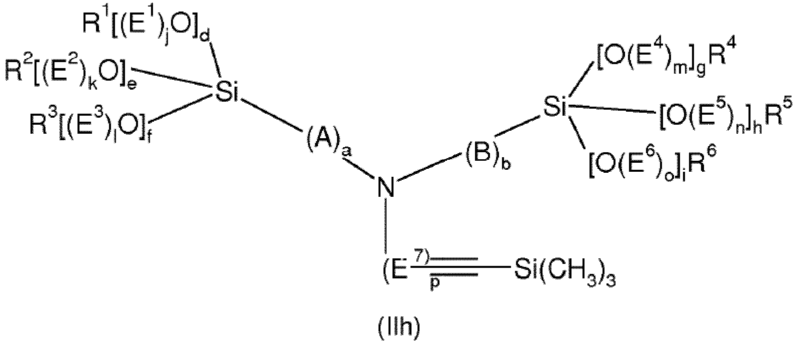 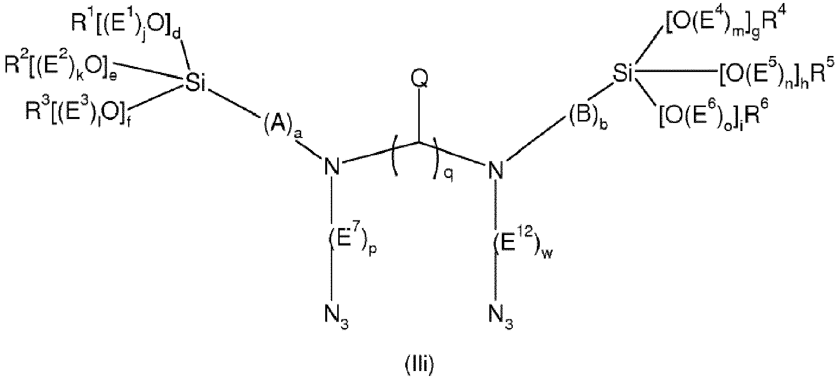 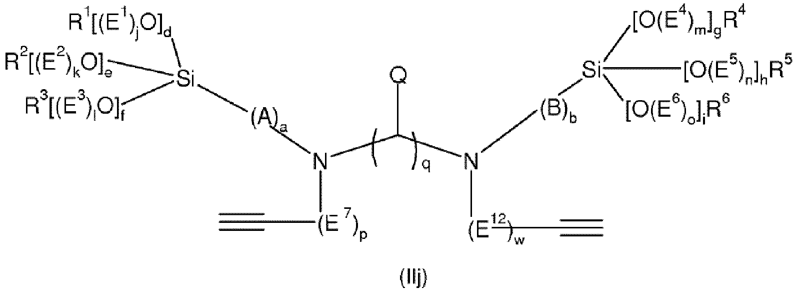 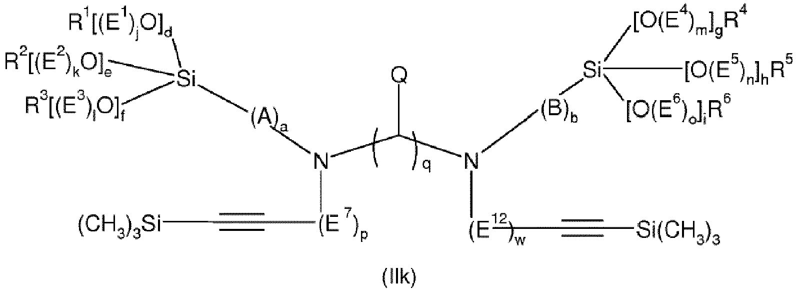 von denen
R¹, R², R³, R⁴, R⁵, R⁶, E¹, E², E³, E⁴, E⁵, E⁶, E⁷, E¹², A, B, Q, a, b, c, d, e,f, g, h, i, j, k, l, m, n, o, p, q und w so wie in Anspruch 1 definiert sind.

3. Verbindung gemäß einer der Ansprüche 1 oder 2, bei der
▪ R¹, R², R³, R⁴, R⁵ und R⁶ unabhängig eine Methyl- oder eine Ethylgruppe darstellen; oder
▪ a 1, 2 oder 3 darstellt; oder
▪ b 1, 2, oder 3 darstellt; oder
▪ d, e, f, g, h und i, identisch oder verschieden, 0 oder 1 darstellen; oder
▪ j, k, l, m, m und o, 0 darstellen; oder
▪ R⁷ eine Methyl-, Ethyl- oder Phenylgruppe darstellt; oder
▪ R⁸ eine Methyl-, Ethyl- oder Phenylgruppe darstellt; oder
▪ R⁹ eine Methyl-, Ethyl- oder Phenylgruppe darstellt.

4. Verbindung gemäß einer der Ansprüche 1 bis 3 bei der
▪ R¹, R², R³, R⁴, R⁵ und R⁶ unabhängig eine Methyl- oder eine Ethylgruppe darstellen;
▪ a 1, 2 oder 3 darstellt;
▪ b 1, 2, oder 3 darstellt;
▪ q 0, 1 darstellt;
▪ d, e, f, g, h und i, identisch oder verschieden, 0 oder 1 darstellen;
▪ j, k, l, m, m und o, 0 darstellen.

5. Verbindung gemäß einer der Ansprüche 1 bis 4, bei der c 0 oder 1 darstellt.

6. Verbindung gemäß einem der Ansprüche 1 bis 5 ausgewählt aus:

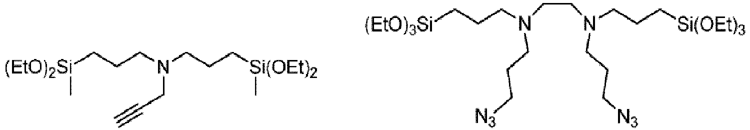

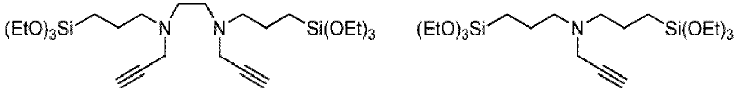

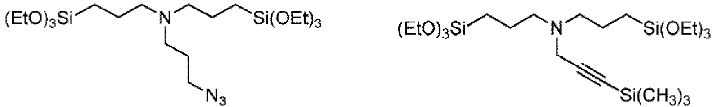

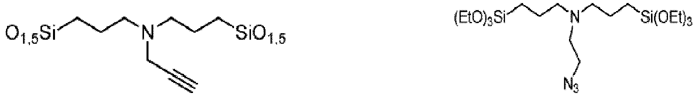

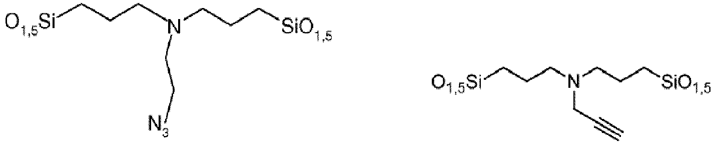

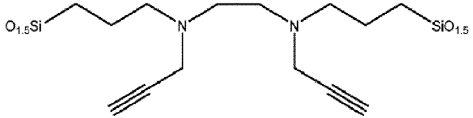

## Claims

1. A compound chosen among compounds of formula (IIa), (IIb), (IIc), (IIg-2), (7), (11), or (14) : 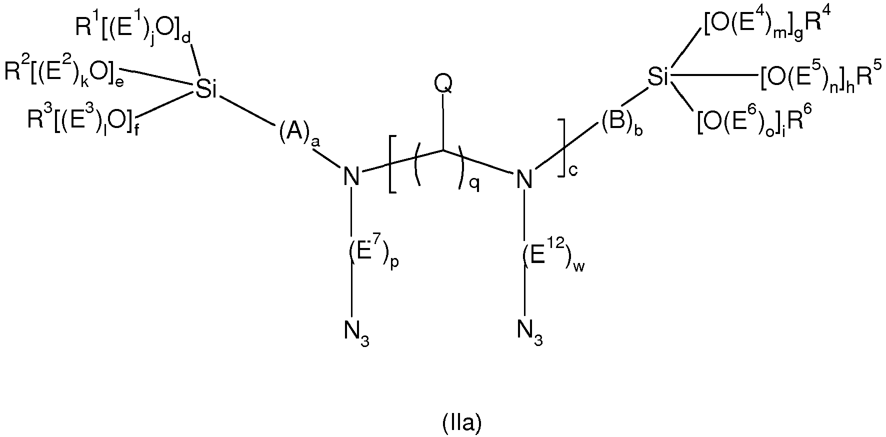 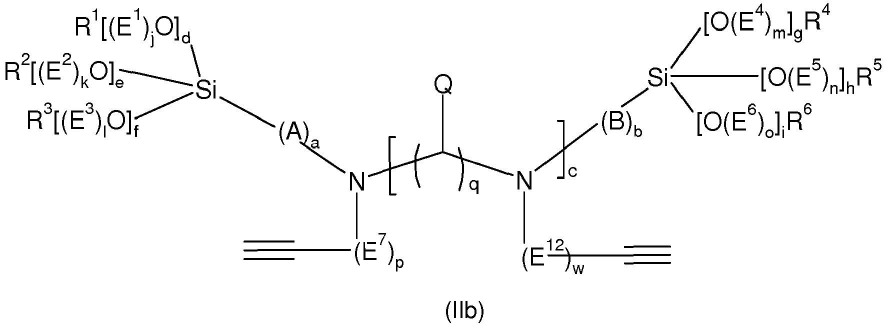 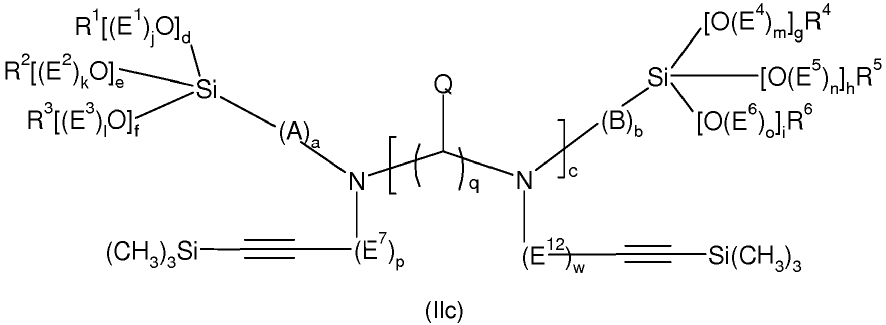 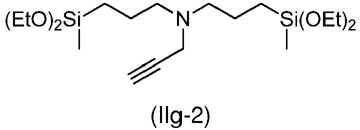 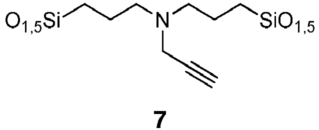 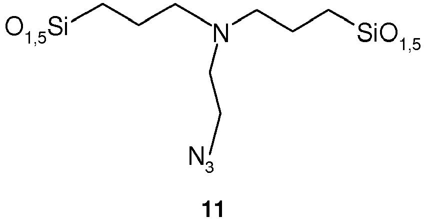 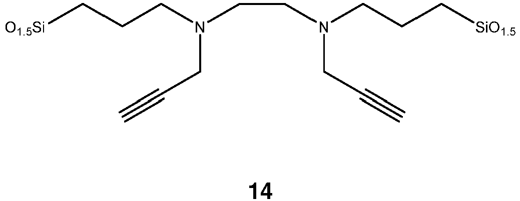 wherein:
▪ R¹, R², R³, R⁴, R⁵ and R⁶, either identical or different, represent a hydrogen atom, a C₁-C₆-alkyl group, an aryl group, a C₁-C₆-alkoxy group, a C₃-C₈-alkylene-alkenyl group:
▪ E¹, E², E³, E⁴, E⁵ and E⁶, either identical or different, represent a C₁-C₆-alkylene group, C(O), C=CH₂, an imino-C₁-C₆-alkyl group, a group (C₁-C₆-alkyl)C=N-:
▪ d, e, f, g, h, i, either identical or different, represent 0, 1, 2, 3, 4, 5, 6:
▪ j, k, I, m, n, o, either identical or different, represent 0, 1, 2, 3:
▪ R⁷, R⁸ and R⁹, either identical or different, represent a C₁-C₆-alkyl group, an aryl group, a C₃-C₈-alkylene-alkenyl group:
▪ A represents CH₂
▪ a represents 1, 2, 3, 4, 5, 6, 7, 8, 9, 10, 11 or 12:
▪ B represents CH₂b represents 1, 2, 3, 4, 5, 6, 7, 8, 9, 10, 11 or 12:
▪ c represents 0, 1, 2 or 3:
▪ Q represents a hydrogen atom
▪ q represents 0, 1, 2, 3 or 4,
▪ E⁷ and E¹² either identical or different, represent a group CR¹⁴R¹⁵, a group OCR¹⁶R^{17:}
▪ R¹⁴, R¹⁵, R¹⁶, R¹⁷, either identical or different, represent a hydrogen atom, a C₁-C₆-alkyl group, a C₁-C₆-alkoxy group, a C₃-C₈-alkylene-alkenyl group, an aryl group, an aryloxy group:
▪ P and w, either identical or different, represent 1, 2, 3, 4, 5, 6, 7, 8, 9, 10, 11 or 12:
as well as an enantiomer, an isomer or a diastereoisomer of this compund.

2. The compound according to claim 1 chosen among compound of formula (IIf), (IIg), (IIh), (IIi), (IIj) or (Ilk) : 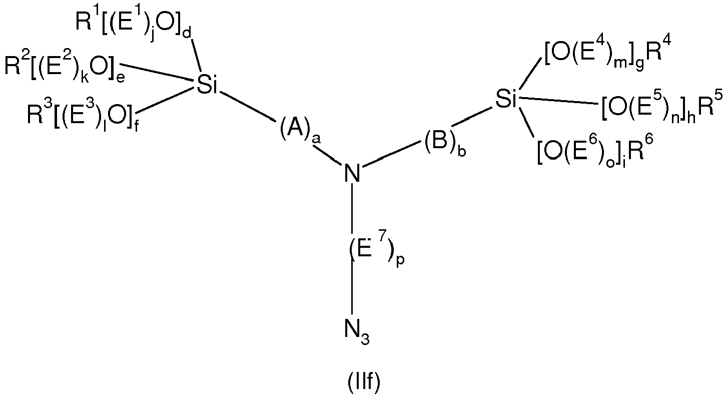 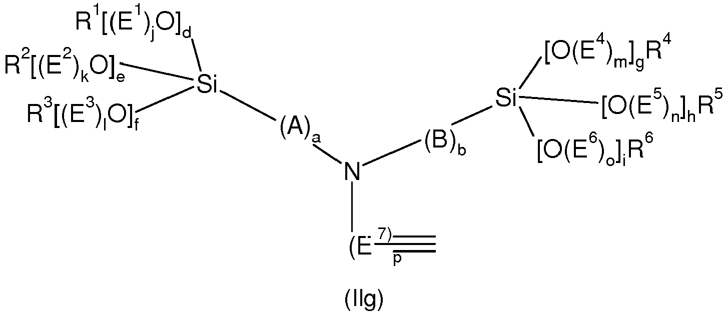 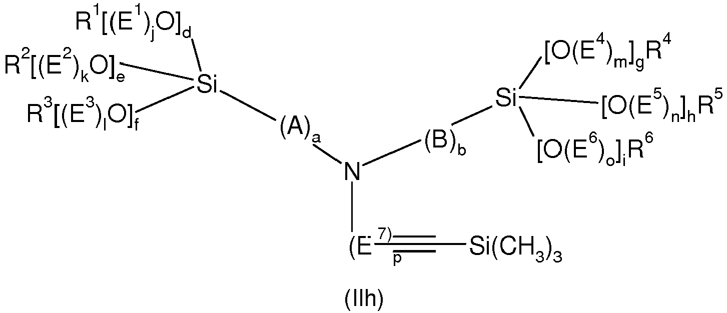 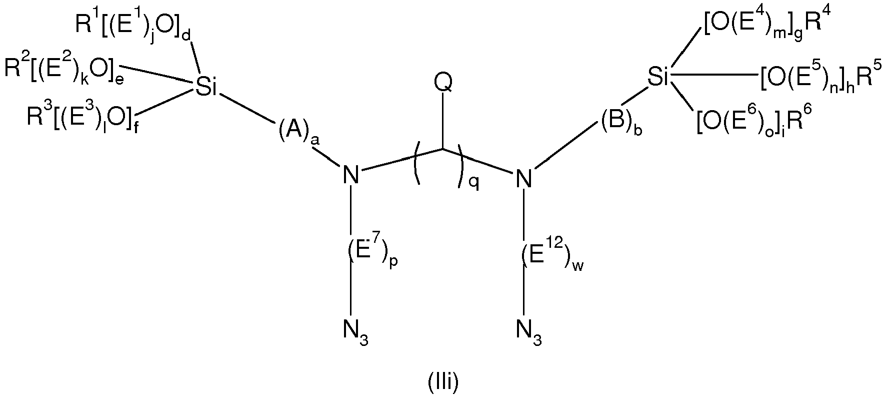 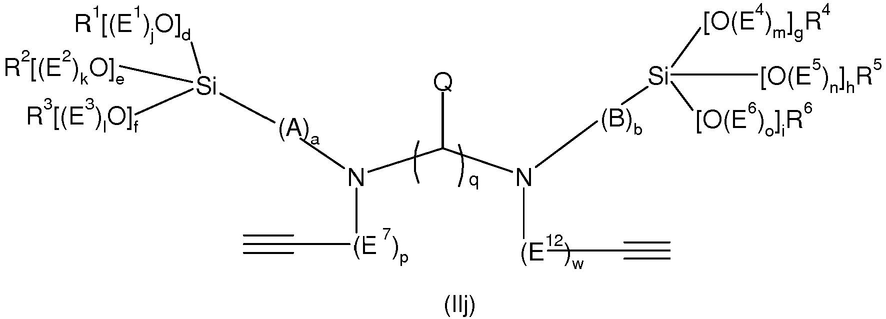 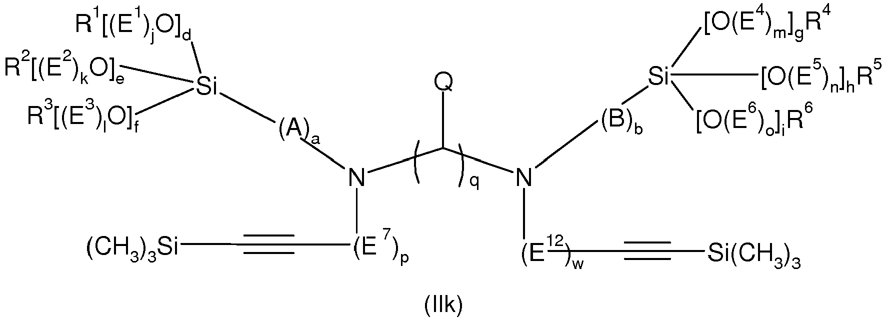 wherein R¹, R², R³, R⁴, R⁵, R⁶, E¹, E², E³, E⁴, E⁵, E⁶, E12, A, Q, B, a, b, c, d, e, f, g, h, i, j, k, l , m, n, o, p, q and w are as defined in claim 1.

3. The compound according to claim 1 or 2 wherein
• R¹, R², R³, R⁴, R⁵ and R⁶ represent independently a methyl or ethyl group; or
• a represents 1, 2 or 3; or
• b represents 1, 2 or 3; or
• d, e, f, g, h and i, either identical or different, represent 0 or 1; or
• j, k, I, m, n and o represent 0; or
• R⁷ represents a methyl, ethyl, phenyl group; or
• R⁸ represents a methyl, ethyl, phenyl group; or
• R⁹ represents a methyl, ethyl, phenyl group.

4. The compound according to any of claims 1 to 3, wherein:
• R¹, R², R³, R⁴, R⁵ and R⁶ represent independently a methyl or ethyl group;
• a represents 1, 2 or 3;
• b represents 1, 2 or 3;
• q represents 0, 1;
• d, e, f, g, h and i, either identical or different, represent 0 or 1;
• j, k, I, m, n and o represent 0.

5. The compound according to any of claims 1 to 4, wherein c represents 0 or 1.

6. The compound according to any of claims 1 to 5 chosen among:
